# EUROPÄISCHE PATENTSCHRIFT

(11) **EP 3 083 850 B1**
(45) Veröffentlichungstag und Bekanntmachung des Hinweises auf die Patenterteilung: **06.02.2019**
(21) Anmeldenummer: 13814549.5
(22) Anmeldetag: 20.12.2013
(51) Int. Cl.: C09D 17/00, C09D 5/44

(54) **PIGMENT UND FÜLLSTOFF ENTHALTENDE FORMULIERUNGEN**
FORMULATIONS CONTAINING PIGMENT AND FILLER
FORMULATIONS CONTENANT UN PIGMENT ET UNE SUBSTANCE DE CHARGE

(43) Veröffentlichungstag der Anmeldung: 26.10.2016
(73) Patentinhaber: BASF Coatings GmbH, 48165 Münster (DE); Henkel AG & Co. KGaA, 40589 Düsseldorf (DE)
(72) Erfinder: MARKOU, Konstantinos, 50739 Köln (DE); NIEGEMEIER, Andreas, 40235 Düsseldorf (DE); HOLTSCHULTE, Sabine, 59387 Ascheberg (DE); MOEBIUS, Jerome, 41564 Kaarst (DE)
(74) Vertreter: Stromberg, Christian
(86) Internationale Anmeldenummer: PCT/EP2013/077686
(87) Internationale Veröffentlichungsnummer: WO 2015/090444

(56) Entgegenhaltungen:
- WO-A2-2013/092088
- GB-A- 2 296 204
- US-A- 4 225 407
- DATABASE WPI Week 201248 Thomson Scientific, London, GB; AN 2012-D89187 XP002727513, -& CN 102 382 504 A (BEIJING SUNRAINBOW PLATE PRINTING TECHN) 21. März 2012 (2012-03-21)
- DATABASE WPI Week 199722 Thomson Scientific, London, GB; AN 1997-242188 XP002727514, & JP H09 78290 A (KANSAI PAINT CO LTD) 25. März 1997 (1997-03-25)
- DATABASE WPI Week 200831 Thomson Scientific, London, GB; AN 2008-E51247 XP002727515, & CN 101 041 624 A (UNIV LIAOCHENG) 26. September 2007 (2007-09-26)
- DATABASE WPI Week 199714 Thomson Scientific, London, GB; AN 1997-149920 -& JP H09 25448 A (SEKISUI CHEM IND CO LTD) 28 January 1997 (1997-01-28)
- DATABASE WPI Week 199238 Thomson Scientific, London, GB; AN 1992-311587 -& JP H04 215830 A (DAINIPPON INK & CHEM KK) 6 August 1992 (1992-08-06)
- DATABASE WPI Week 199324 Thomson Scientific, London, GB; AN 1993-191713 -& JP H05 117573 A (TOYO INK MFG CO) 14 May 1993 (1993-05-14)

## Beschreibung

Die vorliegende Erfindung betrifft eine Pigment und/oder Füllstoff enthaltenden Formulierungen unter Verwendung spezieller Emulgatoren. Außerdem betrifft die vorliegende Erfindung die nach dem Verfahren erhältlichen Formulierungen sowie deren Verwendung.

Es ist bei der Beschichtungsmittelherstellung üblich, pigmentierte und/oder füllstoffhaltige Lacksysteme unter Verwendung sogenannter Pigmentpasten bzw. Füllstoffpasten herzustellen, welche Pigmente in hoher Konzentration vordispergiert enthalten. Die Vordispergierung erfolgt hierbei in der Regel unter Verwendung polymerer Bindemittel, welche einerseits die Pigmentoberflächen benetzen sollen und andererseits eine gute Verträglichkeit gegenüber den Lacksystemen aufweisen müssen, in denen die Pasten später eingesetzt werden. Im Idealfall entsprechen oder enthalten die Bindemittel, die zur Herstellung der Pigment- und/oder Füllstoffpräparation eingesetzt werden, die Hauptbindemitteln der Lacksysteme in denen diese eingesetzt werden.

In vielen Fällen sind jedoch die Hauptbindemittel der pigmentierten und/oder füllstoffhaltigen Lacksysteme ungeeignet die Pigmente und/oder Füllstoffe effektiv zu desaggregieren und eine Reagglomeration zu verhindern. In solchen Fällen empfiehlt sich der Einsatz sogenannter Reibharze bei der Herstellung der Pigment- und/oder Füllstoffpräparationen. Beispielsweise sind die bei der Herstellung von Elektrotauchlacken häufig als Hauptbindemittel eingesetzten aminmodifizierten aromatischen Epoxidharze hinsichtlich ihrer Benetzungseigenschaften weniger geeignet Pigment- und/oder Füllstoffoberflächen zu benetzen. Hier werden dann üblicherweise spezielle Reibharze eingesetzt. Diese können zwar auch durch Modifizierung von Epoxyverbindungen mit Aminen erhalten werden, wobei jedoch molekulare Bausteine eingebaut werden müssen, die eine besonders gute Wechselwirkung mit den Pigment- und/oder Füllstoffoberflächen eingehen können.

Als Hauptbindemittel werden in kathodisch abscheidbaren Elekrotauchlacken zumeist wässrige Dispersionen auf der Basis von Epoxy-Amin-Harzen eingesetzt. In einigen Fällen kommen jedoch auch aminfunktionalisierte Acrylatharzen zum Einsatz.

So offenbart die WO 82/00148 beispielsweise die Herstellung von kathodisch abscheidbaren Primärdispersionen, unter Verwendung kationisch einstellbarer Emulgatoren. Die Emulgatoren können reaktive Gruppen tragen, durch die sie bei der Vernetzungsreaktion in das polymere Harzsystem eingebunden werden können. Explizit genannte Beispiele für Emulgatoren sind die Essigsäuresalze von Fettmono- und -Diaminen wie primären Talg- und Oleylamine oder die Essigsäuresalze von Talg- und Oleyldiaminen. Talg- und Oleylamine enthalten Kohlenwasserstoffketten mit mindestens einer Kohlenstoff-Kohlenstoff-Doppelbindung. Auch polymere Emulgatoren können eingesetzt werden, wie beispielsweise ein Epoxy-Phenol-Addukt, das mit Diethanolamin umgesetzt und mit Essigsäure kationisch eingestellt wurde. Als Co-Emulgator wird in einigen Ausführungsbeispielen der WO 82/00148 Ethoduomeen™ T13 eingesetzt, welches ein tertiäres Amin mit ungesättigtem Alkylrest darstellt. Laut Angabe des Herstellers Akzo Nobel handelt es sich um N',N',N-Tris-(2-hydroxyethyl)-N-tallowyl-1,3-diaminopropan. Gemäß der Lehre der WO 82/00148 sind die kationisch eingestellten Emulgatoren die einzigen kationischen Komponenten des Harzsystems. Die Primärdispersionen der WO 82/00148 können auch als Miniemulsionen bezeichnet werden.

Miniemulsionen sind Dispersionen aus Wasser, einer Ölphase und einer oder mehreren oberflächenaktiven Substanzen, wobei die dispergiert vorliegenden Teilchen einen mittleren Teilchendurchmesser von 5 bis 500, vorzugsweise 25 bis 500 und besonders bevorzugt 50 bis 500 nm aufweisen. Miniemulsionen werden als metastabil angesehen (vgl. Emulsion Polymerization and Emulsion Polymers, Editoren. P. A. Lovell und Mohamed S. El-Aasser, John Wiley and Sons, Chichester, New York, Weinheim, 1997, Seiten 700ff; Mohamed S. El-Aasser, Advances in Emulsion Polymerization and Latex Technology, 30th Annual Short Course, Volume 3, June 7-11, 1999, Emulsion Polymers Institute, Lehigh University, Bethlehem, Pennsylvania, U. S. A.). Die sogenannten Miniemulsionen finden in der Technik breite Anwendung beispielsweise in Reinigern, Kosmetika oder Körperpflegeprodukten, aber auch Beschichtungsmittelzusammensetzungen wie beispielsweise Elektrotauchlacken.

Die Herstellung wässriger Primärdispersionen mit Hilfe der Miniemulsionspolymerisation ist beispielsweise aus den internationalen Patentanmeldungen WO 82/00148 und WO 98/02466 oder den deutschen Patentanmeldungen DE 196 28 143 A1 und DE 196 28 142 A2 bekannt. Bei diesen bekannten Verfahren können die Monomeren in der Gegenwart unterschiedlicher niedermolekularer, oligomerer oder polymerer hydrophober Substanzen oder Costabilisatoren copolymerisiert werden (vgl. DE 196 28 142 A2). Außerdem können hydrophobe, in Wasser wenig lösliche organische Hilfsmittel wie beispielsweise Weichmacher, Filmbildehilfsmittel wie beispielsweise Koaleszenzmittel, oder sonstige organische Additive in die Monomertröpfchen der Miniemulsion eingearbeitet werden (vgl. DE 196 28 143 A1). Die WO 82/00148 beschreibt beispielsweise den Einsatz von Emulgatoren zur Stabilisierung der dort offenbarten Emulsionen.

In einer Studie von Grabs und Schmidt-Naake (Macromol. Symp. 2009, 275-276, S133-141) werden Miniemulsionen aus 2-Aminoethylmethacrylat-Hydrochlorid und Styrol, Butylacrylat und/oder Butylmethacrylat hergestellt und in-situ polymersiert, wobei Harzpartikel entstehen, die aufgrund der positiven Ladung des Aminoethylmethacrylat-Monomers eine positive Oberflächenladung tragen und hierdurch in der Dispersion stabilisiert werden. Als kationischer Co-Emulgator bei der Dispersionsherstellung kann das gesättigte Cetyltrimethylammoniumbromid eingesetzt werden, welches ein quaternäres N-Atom aufweist und daher eine permanente positive Ladung trägt. Die positive Ladung wird in beiden Fällen durch Halogenidanionen kompensiert.

Eine Aufgabe der vorliegenden Erfindung ist es Pigment- und/oder Füllstoff enthaltenden Formulierung bereitzustellen, die mit verschiedenen Reibharzen hergestellt werden können. Die nach dem Verfahren erhältlichen Pigment- und/oder Füllstoff enthaltenden Formulierungen sollen in wässrigen Beschichtungsmittelzusammensetzungen einsetzbar sein und diesen eine verbesserte Langzeitstabilität verleihen. Auch sollen die hieraus hergestellten wässrigen Beschichtungsmittel bessere Filmbildungseigenschaften aufweisen, als die bisher bekannten, so dass sie breiter angewandt werden können, als dies bislang möglich war.

Ferner war es eine Aufgabe der vorliegenden Erfindung eine wässrige Zubereitung bereitzustellen, welche die Pigment- und/oder Füllstoff enthaltende Formulierung der vorliegenden Erfindung enthält, und die insbesondere im Bereich der Elektrotauchlackierung als Beschichtungsmittel eingesetzt werden kann, um die Filmbildung der Elektrotauchlacke zu verbessern und einen erhöhten Korrosionsschutz metallischer Substrate, insbesondere von Aluminiumsubstraten zu erreichen.

Die Aufgaben der vorliegenden Erfindung wurden gelöst durch Bereitstellung einer Pigment und/oder Füllstoff enthaltenden Formulierung, umfassend einen Feststoff oder mehrere Feststoffe gewählt aus der Gruppe der Pigmente und Füllstoffe, und einen Emulgator (EQ), der die folgende Formel besitzt:

R¹-N^{⊕}(R²)(R³)(R⁴) X^{⊖} (EQ),

worin
R¹ ein mindestens eine aromatische Gruppe und mindestens eine aliphatische Gruppe enthaltender Rest mit 15 bis 40 Kohlenstoffatomen ist, der mindestens eine funktionelle Gruppe gewählt aus Hydroxylgruppen, Thiolgruppen und primären oder sekundären Aminogruppen enthält und/oder mindestens eine Kohlenstoff-Kohlenstoff-Mehrfachbindung aufweist, wobei der Rest R¹ - die Struktur Grₐₗᵢ₁-Grₐᵣₒₘ-Grₐₗᵢ₂-besitzt, worin Grₐᵣₒₘ für eine aromatische Gruppe, Grₐₗᵢ₁ für eine erste aliphatische Gruppe und Grₐₗᵢ₂ für eine zweite aliphatische Gruppe steht und wobei Grₐₗᵢ₁ linear, unsubstituiert und heteroatomfrei ist und eine bis drei Doppelbindungen aufweist, Grₐᵣₒₘ eine Phenylen- oder Naphthylen-Gruppe ist, und Grₐₗᵢ₂ linear ist, eine Hydroxylgruppe in beta-Position zum Stickstoffatom der allgemeinen Formel des Emulgators (EQ) und zusätzlich als Heteroatom O, in Form einer Ethergruppe enthält,
R², R³ und R⁴ unabhängig voneinander gleiche oder verschiedene, aliphatische Reste mit 1 bis 14 Kohlenstoffatomen sind, und X^{⊖} für das Säureanion einer organischen oder anorganischen Säure HX steht.

Pigment und/oder Füllstoff enthaltende Formulierungen im Sinne dieser Erfindung werden in der Literatur häufig auch als Pigmentpräparationen, Pigmentpasten oder Mahlgut bezeichnet.

Im Hinblick auf den Stand der Technik war es überraschend und für den Fachmann nicht vorhersehbar, dass die Aufgaben, die der vorliegenden Erfindung zugrunde lagen, durch die erfindungsgemäßen Pigment und/oder Füllstoff enthaltenden Formulierungen gelöst werden konnten. Insbesondere war es überraschend, dass der erfindungsgemäß zu verwendende Emulgator (EQ) für die verbesserten Eigenschaften der Pigment und/oder Füllstoff enthaltenden Formulierung und der daraus herstellbaren wässrigen Zubereitungen maßgeblich verantwortlich sind.

Der Gegenstand der vorliegenden Erfindung ist in den Ansprüchen 1-13 definiert. Die hierin beschriebenen Ausführungsformen, die nicht durch die Ansprüche abgedeckt sind, dienen lediglich der Veranschaulichung des technischen Kontextes der vorliegenden Erfindung.

### Emulgator (EQ)

Der hierin beschriebene Emulgator (EQ) besitzt die allgemeine Formel:

R¹-N^{⊕}(R²)(R³)(R⁴)X^{⊖} (EQ),

worin
R¹ ein mindestens eine aromatische Gruppe und mindestens eine aliphatische Gruppe enthaltender Rest mit 15 bis 40 Kohlenstoffatomen ist, der mindestens eine funktionelle Gruppe gewählt aus Hydroxylgruppen, Thiolgruppen und primären oder sekundären Aminogruppen enthält und/oder mindestens eine Kohlenstoff-Kohlenstoff-Mehrfachbindung aufweist,
R², R³ und R⁴ unabhängig voneinander gleiche oder verschiedene, aliphatische Reste mit 1 bis 14 Kohlenstoffatomen sind, und
X^{⊖} für das Säureanion einer organischen oder anorganischen Säure HX steht. Unter einer Kohlenstoff-Kohlenstoff-Mehrfachbindung wird hierin eine Kohlenstoff-Kohlenstoff-Doppelbindung oder eine Kohlenstoff-Kohlenstoff-Dreifachbindung verstanden. Vorzugsweise handelt es sich bei der Kohlenstoff-Kohlenstoff-Mehrfachbindung um eine Kohlenstoff-Kohlenstoff-Doppelbindung.

Bevorzugt enthält der Rest R¹ eine aromatische Gruppe Grₐᵣₒₘ und zwei an Grₐᵣₒₘ gebundene aliphatische Gruppen Grₐₗᵢ₁ und Grₐₗᵢ₂. Besonders bevorzugt besitzt der Rest R¹- die Struktur Grₐₗᵢ₁-Grₐᵣₒₘ-Grₐₗᵢ₂-.

Bevorzugt enthält der Rest R¹ in der mindestens einen aliphatischen Gruppe Grₐₗᵢ₁ mindestens eine Kohlenstoff-Kohlenstoff-Mehrfachbindung, besonders bevorzugt mindestens eine Kohlenstoff-Kohlenstoff-Doppelbindung. Das Vorhandensein von Kohlenstoff-Kohlenstoff-Mehrfachbindungen, insbesondere Kohlenstoff-Kohlenstoff-Doppelbindungen wirkt sich positiv auf die Scherstabilität der unter Verwendung der Emulgatoren hergestellten Dispersionen und Beschichtungsmittel aus. Insbesondere kann eine unerwünschte Migration der Emulgatoren in den Dispersionen und Beschichtungsmittelzusammensetzung verhindert oder reduziert werden. Besonders bevorzugt enthält der Rest R¹ in der mindestens einen aliphatischen Gruppe Grₐₗᵢ₁ eine bis drei Kohlenstoff-Kohlenstoff-Doppelbindungen.

Ganz besonders bevorzugt enthält der Rest R¹ in der mindestens einen aliphatischen Gruppe Grₐₗᵢ₁ mindestens eine Kohlenstoff-Kohlenstoff-Mehrfachbindung, insbesondere mindestens eine Kohlenstoff-Kohlenstoff-Doppelbindung, vorzugsweise ein bis drei Kohlenstoff-Kohlenstoff-Doppelbindungen und zusätzlich in einer von der vorgenannten aliphatischen Gruppe Grₐₗᵢ₁ verschiedenen, zweiten aliphatischen Gruppe Grₐₗᵢ₂ mindestens eine funktionelle Gruppe gewählt aus Hydroxylgruppen, Thiolgruppen und primären oder sekundären Aminogruppen. Hydroxygruppen, Thiolgruppen und primäre oder sekundäre Aminogruppen bedingen eine Reaktivität des Emulgators gegenüber lacktypischen Vernetzern wie beispielsweise blockierten oder nicht blockierten Polyisocyanaten, Aminoplastharzen wie beispielsweise Melamin-Formaldehydharzen, Tris(alkoxycarbonylamino)triazinen, die von den vorgenannten Vernetzern verschieden sind oder aber auch Epoxygruppen enthaltenden Harzen. Dispersionen, die solche Emulgatoren enthalten, die Hydoxylgruppen, Thiolgruppen und/oder primäre oder sekundäre Aminogruppen tragen, lassen sich somit während des Härtungsprozesses eines mit Hilfe der erfindungsgemäßen Formulierung hergestellten Beschichtungsmittels in das Beschichtungsmittel chemisch einbauen, wodurch sich eine unerwünschte Migration der Emulgatoren verhindern oder reduzieren lässt.

Die mindestens eine aliphatische Gruppe Grₐₗᵢ₁ im Rest R¹, die mindestens eine Kohlenstoff-Kohlenstoff-Doppelbindung trägt, kann linear oder verzweigt sein und ist vorzugsweise linear. Sie kann zudem substitutiert oder unsubstituiert sein und ist vorzugsweise unsubstituiert. Darüber hinaus kann diese aliphatische Gruppe Heteroatome gewählt aus der Gruppe bestehend aus O, S und N enthalten, ist jedoch vorzugsweise heteroatomfrei. Diese aliphatische Gruppe im Rest R¹ ist daher besonders bevorzugt linear, unsubstituiert, heteroatomfrei und enthält eine bis drei Doppelbindungen. Vorzugsweise enthält die Gruppe Grₐₗᵢ₁ 8 bis 30, besonders bevorzugt 10 bis 22 und ganz besonders bevorzugt 12 bis 18 Kohlenstoffatome wie beispielsweise 15 Kohlenstoffatome.

Die mindestens eine aliphatische Gruppe Grₐₗᵢ₂ im Rest R¹, die mindestens eine funktionelle Gruppe gewählt aus Hydroxylgruppen, Thiolgruppen und primären oder sekundären Aminogruppen trägt, worunter OH-Gruppen besonders bevorzugt sind, und die von Grₐₗᵢ₁ verschieden ist, kann linear oder verzweigt sein und ist vorzugsweise linear. Sie kann zudem substitutiert oder unsubstituiert sein und ist vorzugsweise unsubstituiert. Darüber hinaus kann diese aliphatische Gruppe Heteroatome gewählt aus der Gruppe bestehend aus O, S und N enthalten, worunter O bevorzugt ist. Die aliphatische Gruppe Grₐₗᵢ₂ ist vorzugsweise direkt an das in der obigen allgemeinen Formel des Emulgators (EQ) aufgeführte Stickstoffatom gebunden. Wenn vom "Stickstoffatom in der allgemeinen Formel des erfindungsgemäßen Emulgators (EQ)" hierin die Rede ist, dann ist damit der an die Reste R¹, R², R³ und R⁴ gebundene positiv geladene Stickstoff gemeint. Vorzugsweise befindet sich die mindestens eine funktionelle Gruppe gewählt aus Hydroxylgruppen, Thiolgruppen und primären oder sekundären Aminogruppen in beta-Stellung zum Stickstoffatom der obigen allgemeinen Formel des Emulgators (EQ). Ein besonderer Vorteil der vorliegenden Emulgatoren (EQ) besteht in der permanenten positiven Ladung des Stickstoffatoms in der allgemeinen Formel des erfindungsgemäßen Emulgators. Im Ergebnis lässt sich durch die permanent positive Ladung die Dispersions- und Lagerstabilität solcher erfindungsgemäßen Pigment und/oder Füllstoff enthaltenden Formulierungen oder daraus hergestellter Beschichtungsmittelzusammensetzungen weiter erhöhen und eine aminkatalysierte Reaktion verhindern.

Ein weiterer Vorteil solcher Emulgatoren (EQ), bei welchen eine Hydroxylgruppe, Thiolgruppe, oder eine primäre oder sekundäre Aminogruppe in beta-Stellung zum Stickstoffatom des Emulgators der allgemeinen (EQ) steht, liegt in der Möglichkeit Chelate mit Metallionen zu bilden, was von Vorteil ist, wenn gezielt die erfindungsgemäßen Pigmente und/oder Füllstoffe enthaltenden Formulierungen in Beschichtungsmittelzusammensetzungen eingesetzt werden, aus denen Metallionen abgeschieden werden sollen. Entsprechend chelatisiert vorliegende Metallionen liefern eine verbesserte Abscheidung und können die Korrosionsschutzwirkung derartiger Beschichtungen erhöhen. Ganz besonders bevorzugt steht eine Hydroxylgruppe in beta-Stellung zu besagtem Stickstoffatom. Vorzugsweise enthält die Gruppe Grₐₗᵢ₂ 2 bis 10, besonders bevorzugt 2 bis 8 und ganz besonders bevorzugt 2 bis 6 Kohlenstoffatome wie beispielsweise 2 oder 3 Kohlenstoffatome.

Die aromatische Gruppe Grₐᵣₒₘ im Rest R¹ ist vorzugsweise eine Phenylen- oder Naphthylengruppe, vorzugsweise eine Phenylengruppe. Die aromatische Gruppe Grₐᵣₒₘ kann substituiert oder unsubstituiert sein und ist vorzugsweise unsubstituiert. Die aromatische Gruppe Grₐᵣₒₘ kann Heteroatome enthalten gewählt aus der Gruppe bestehend aus O, S und N, ist jedoch vorzugsweise heteroatomfrei. Vorzugsweise enthält die Gruppe Grₐᵣₒₘ 6 bis 15, besonders bevorzugt 6 bis 12 und ganz besonders bevorzugt 6 bis 10 Kohlenstoffatome wie beispielsweise 6 Kohlenstoffatome.

Im erfindungsgemäßen Emulgator (EQ) hat der Rest (R¹-) die Formel:

Grₐₗᵢ₁-Grₐᵣₒₘ-Grₐₗᵢ₂-

worin
Grₐₗᵢ₁ linear, unsubstituiert und heteroatomfrei ist und eine bis drei, vorzugsweise eine oder zwei Doppelbindungen aufweist,
Grₐᵣₒₘ eine Phenylen- oder Naphthylen-Gruppe ist, und
Grₐₗᵢ₂ linear ist, eine Hydroxylgruppe trägt, vorzugsweise in beta-Position zum Stickstoffatom der allgemeinen Formel des Emulgators (EQ) und zusätzlich als Heteroatom O, in Form einer Ethergruppe enthält, wobei vorzugsweise,
im Falle, dass Grₐᵣₒₘ eine Phenylen-Gruppe ist, die Gruppen Grₐₗᵢ₁ und Grₐₗᵢ₂ in meta-Stellung zueinander an die Phenylen-Gruppe gebunden sind.

Die Reste R², R³ und R⁴ stehen unabhängig voneinander für gleiche oder verschiedene, aliphatische Reste mit 1 bis 14, vorzugsweise 2 bis 10, besonders bevorzugt 2 bis 8 Kohlenstoffatomen. Enthält R¹ keine funktionelle Gruppe gewählt aus Hydroxylgruppen, Thiolgruppen und primären oder sekundären Aminogruppen, so ist es von besonderem Vorteil, wenn wenigstens einer der Reste R², R³ und R⁴ eine solche funktionelle Gruppe trägt. Ganz besonders bevorzugt tragen mindestens zwei der Reste R², R³ und R⁴ eine funktionelle Gruppe gewählt aus Hydroxylgruppen, Thiolgruppen und primären oder sekundären Aminogruppen. Hierunter ganz besonders bevorzugt sind Hydroxylgruppen. Besonders bevorzugt ist besagte funktionelle Gruppe in den Resten R², R³ und R⁴ terminal, während sie im Rest R¹ nicht-terminal ist.

Die Reste R², R³ und R⁴ können dabei linear oder verzweigt sein, vorzugsweise sind sie linear. R², R³ und R⁴ können Kohlenstoff-Kohlenstoff-Mehrfachbindungen tragen, sind jedoch vorzugsweise gesättigt.

Bevorzugt enthalten die aliphatischen Reste R², R³ und/oder R⁴ neben den oben genannten Hydroxyl-, Thiol- und primären und sekundären Aminogruppen mindestens eine weitere, vorzugsweise genau eine weitere funktionelle Gruppe gewählt aus Ethergruppen, Estergruppen und Amidgruppen. Der Ethersauerstoff, das -O- der -O-C(=O)-Gruppe und der Amidstickstoff der Amidgruppe befinden sich vorzugsweise in beta-Position zum Stickstoffatom der allgemeinen Formel des Emulgators (EQ).

Das Anion X^{⊖} ist in den Emulgatoren (EQ) das Säureanion einer organischen oder anorganischen Säure HX, vorzugsweise außer Halogeniden. Besonders bevorzugt handelt es sich um das Anion einer Monocarbonsäure wie beispielsweise der bei der Neutralisation von kathodischen Elektrotauchlackharzen eingesetzten Monocarbonsäuren. Geeignete Anionen von Monocarbonsäuren sind vorzugsweise solche mit 1 bis 10 Kohlenstoffatomen wie beispielsweise Formiate, Acetate oder Lactate. Besonders bevorzugt steht X^{⊖} für Anionen von Hydroxycarbonsäuren, insbesondere für Lactat.

In einer besonders bevorzugten Ausführungsform der vorliegenden Erfindung handelt es sich beim Emulgator (EQ) um einen solchen, wie er in der folgenden Formel widergegeben ist: 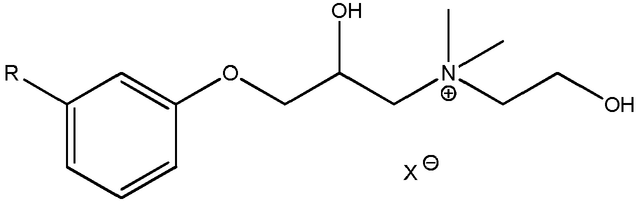 worin R für C₁₅H₃₁₋₂ₙ und X^{⊖} für Lactat oder andere Anionen organischer Säuren steht und wobei n = 0 bis 3 sein kann, d.h. der Rest R kann 0 bis 3 Kohlenstoff-Kohlenstoff-Doppelbindungen aufweisen. Diese Verbindung ist beispielsweise dadurch erhältlich, dass man N,N-Dimethylethanolamin-Lactat an einen Cardanolglycidylether der Formel 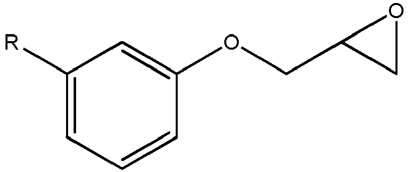 mit R für C₁₅H₃₁₋₂ₙ und n = 0 bis 3, addiert und hierbei den Oxiranring öffnet. Ausgehend vom Cardanolglycidylether lässt sich beispielsweise eine Vielzahl bevorzugter, erfindungsgemäßer Emulgatoren durch Addition eines Ammoniumsalzes der allgemeinen Formel HN^{⊕}(R²)(R³)(R⁴)(X^{⊖}) an den Oxiranring herstellen. Hierin besitzen die Reste R², R³ und R⁴ und X^{⊖} die oben bereits angegebenen Bedeutungen.

Das Ausgangsprodukt zur Herstellung eines Cardanolgylcidylethers ist die natürlich vorkommende Substanz Cardanol, welche folgende Formel 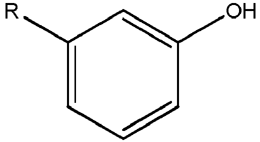 mit R für C₁₅H₃₁₋₂ₙ und n = 0 bis 3 besitzt. Wie aus der Chemie von Naturprodukten, insbesondere der Chemie natürlich vorkommender Fette und Öle und deren Folgeprodukten bekannt, liegen diese Substanzen in der Regel als Gemisch von Einzelverbindungen mit einer unterschiedlichen Anzahl von Kohlenstoff-Kohlenstoff-Doppelbindungen vor. Das Naturprodukt Cardanol ist ein derartiges Gemisch, bei dem sich die Einzelkomponenten durch die Anzahl der Doppelbindungen in der Kette R unterscheiden. Die häufigsten Einzelkomponenten enthalten 0 bis 3 Doppelbindungen. Zur Herstellung des Cardanolglycidylethers wird Cardanol beispielsweise mit Epichlorhydrin umgesetzt.

Für alle Ausführungsformen der erfindungsgemäßen Pigment und/oder Füllstoff enthaltenden Formulierungen gilt, dass nicht nur ein Emulgator (EQ), sondern auch eine Mischung mehrerer Emulgatoren (EQ) eingesetzt werden kann. Hierunter bevorzugt sind solche Mischungen, bei welchen ein Teil der Emulgatoren im Rest R¹ Kohlenstoff-Kohlenstoff-Mehrfachbindungen trägt und ein weiterer Teil im Rest R¹ keine Kohlenstoff-Kohlenstoff-Mehrfachbindungen enthält. Beim Einsatz von Emulgatorengemischen mehrerer Emulgatoren (EQ) enthalten vorzugsweise mehr als 50 mol-%, besonders bevorzugt mehr als 70 mol-% der Reste R¹ Kohlenstoff-Kohlenstoff-Mehrfachbindungen, wobei Kohlenstoff-Kohlenstoff-Doppelbindungen besonders bevorzugt sind. Für die oben genannten Cardanol-Derivate bedeutet dies, dass im Rest R = C₁₅H₃₁₋₂ₙ vorzugsweise in mehr als 50 mol-%, besonders bevorzugt mehr als 70 mol-% der Reste R n = 1 bis 3 ist und in den verbleibenden Resten R n = 0 ist. Es können jedoch auch Emulgatorgemische eingesetzt werden, die nur aus solchen Emulgatoren (EQ) bestehen, bei welchen n = 1 bis 3 ist oder solche bei welchen n = 0 ist.

Die Emulgatoren (EQ) werden in der erfindungsgemäß einzusetzenden Pigment und/oder Füllstoff enthaltenden Formulierung vorzugsweise in einer Menge von 0,5 bis 15,0 Gew.-%, besonders bevorzugt einer Menge von 1,0 bis 10,0 Gew.-% und ganz besonders bevorzugt in einer Menge von 2,0 bis 8,0 Gew.-%, jeweils bezogen auf das Gewicht eines Liters der Pigment und/oder Füllstoff enthaltenden Formulierung eingesetzt.

### Pigmente und Füllstoffe

Als Pigmente und Füllstoffe können prinzipiell alle anorganischen und organischen Pigmente und Füllstoffe eingesetzt werden. Die Pigmente und Füllstoffe werden üblicherweise in Bezug auf den Einsatzzweck der Pigment und/oder Füllstoff enthaltenden Formulierung ausgewählt. Soll die Formulierung beispielsweise der Pigmentierung von kathodischen Elektrotauchlacken dienen, die bekanntlicherweise einen pH-Wert im Sauren aufweisen, so kommen beispielsweise für die Formulierungen keine Kreidepigmente oder Kreidefüllstoffe (Calciumcarbonat) in Frage, da sich diese im sauren Medium vollständig auflösen würden. Eine teilweise Auflösung von Pigmenten im späteren Beschichtungsmittel kann jedoch sogar gewünscht sein, wenn hierdurch beispielsweise katalytisch aktive Metallionen langsam und sukzessive freigesetzt werden.

Typische anorganische Pigmente sind Oxid- und Oxidhydroxid-Pigmente, wie beispielsweise Titandioxid, Zinkoxid, Eisenoxid und Chromoxid, Oxid-Mischphasenpigmente, wie beispielsweise Bismut-Molybdän-Vanadium-Oxidgelb, Chromtitangelb, Spinellblau, Eisen-Manganbraun, Zink-Eisenbraun, Eisen-Manganschwarz und Spinellschwarz, Sulfid- und Sulfidselenidpigmente, wie beispielsweise Zinksulfid, Lithopone, Cadmiumgelb und Cadmiumrot, Carbonatpigmente, wie Calciumcarbonat (mit der obengenannten anwendungstechnischen Einschränkung), Chromat- und Chromat-Molybdän-Mischphasenpigmente, wie beispielsweise Chromgelb und Molybdatorange und -rot, Komplexsalzpigmente, wie beispielsweise Eisenblau, Silikatpimente, wie beispielsweise Aluminiumsilikat und Ultramarin (blau, violett und rot), Pigmente aus chemischen Elementen, wie beispielsweise Aluminium, Kupfer-Zink-Legierungen und Pigmentruß, sowie andere Pigmente, wie beispielweise Bariumsulfat.

Typische organische Pigmente sind Monoazopigmente, Disazopigmente und polycyclische Pigmente wie beispielsweise Perylenpigmente und Phthalocyaninpigmente.

Typische anorganische Füllstoffe sind Silicate, wie beispielsweise Talk und Kaolin, Kieselsäuren, wie beispielsweise gefällte oder pyrogene Kieselsäuren, Oxide, wie beispielsweise Aluminiumhydroxid oder Magnesiumhydroxid, Sulfate, wie beispielsweise Blanc fixe und Calciumsulfate, sowie verschiedene Carbonate.

Zu den Pigmenten und Füllstoffen werden hierin auch solche schwerlöslichen Verbindungen gezählt, die neben den typischen Aufgaben von Pigmenten und Füllstoffen beispielsweise auch katalytische Aufgaben wahrnehmen können. So ist es besonders bevorzugt, insbesondere bei der Verwendung der Pigment und/oder Füllstoff enthaltenden Formulierungen zur Herstellung von Elektrotauchlacken, schwerlösliche Bismutverbindungen als Pigmente einzuarbeiten, welche die Vernetzungsreaktion zwischen den Hauptbindemitteln und den Vernetzern katalysieren. Typische Vertreter schwerlöslicher Bismutverbindungen sind beispielsweise Bismutsubnitrat und Bismutsubsalicylat. Den wässrigen Zubereitungen, die unter Verwendung von Pigment und/oder Füllstoff enthaltenden Formulierungen erhalten werden, die schwerlösliche Bismutverbindungen umfassen, können Komplexbildner wie beispielsweise EDTA, Bicin oder andere zugesetzt werden, um sukzessive lösliches Bismut zu erzeugen.

Für die vorliegende Erfindung ist eine scharfe Unterscheidung zwischen Pigmenten und Füllstoffen nicht notwendig. In der Praxis wird zur Unterscheidung häufig der Brechungsindex herangezogen. Liegt dieser oberhalb von 1,7 so spricht man in der Regel von Pigmenten, liegt er unterhalb dieses Werts von Füllstoffen.

Zur Begünstigung der Dispergierbarkeit der Pigmente und Füllstoffe in den Dispersionen, können den Dispersionen noch Netz- und/oder Dispergiermittel sowie Colösemittel, insbesondere Monoalkohole oder Glykole, zugesetzt werden.

### Polymere

Als weiteren Bestandteil kann die erfindungsgemäße Pigment und/oder Füllstoff enthaltende Formulierung ganz besonders bevorzugt Polymere (polymere Substanzen) enthalten. Diese dienen dann als sogenannte Reibharze. Beispiele geeigneter Polymere sind Polymerisations-, Polykondensations- und/oder Polyadditionsprodukte. Insbesondere können solche Polymere eingesetzt werden, die auf die spätere Anwendung der Pigment und/oder Füllstoff enthaltenden Formulierung in einer bestimmten Art von Beschichtungsmittel abgestimmt sind. So können insbesondere Epoxy-Amin-Addukte eingearbeitet werden, wie sie in Beschichtungsmitteln, insbesondere Elektrotauchlacken üblicherweise eingesetzt werden. Bevorzugt sind insbesondere solche Epoxy-Amin-Addukte, die quaternäre Stickstoffatome enthalten, diese können durch Umsetzung von Epoxygruppen des Epoxy-Amin-Harzes mit Ammoniumsalzen der allgemeinen Formel HN^{⊕}(R²)(R³)(R⁴)(X^{⊖}) - analog der Herstellung von (EQ) - erhalten werden. Die Definitionen der Reste R², R³, R⁴ und X^{⊖} entsprechen den Definitionen zur Formel (EQ). Zusätzlich oder alternativ zu den Epoxy-Amin-Addukten können beispielsweise auch Acrylatharze einsetzt werden. Unter diesen Acrylatharzen sind ebenfalls solche mit quaternären Stickstoffatomen bevorzugt. Prinzipiell können sämtliche als Reibharze bekannten und eingesetzten Polymere verwendet werden.

### Vernetzungsmittel (V)

Die erfindungsgemäßen Pigment und/oder Füllstoff enthaltenden Formulierungen und somit auch die unter Verwendung derselben herstellbaren wässrigen Zubereitungen können Vernetzungsmittel enthalten. Insbesondere die aus den Pigment und/oder Füllstoff enthaltenden Formulierungen herstellbaren Beschichtungsmittel wie Elektrotauchlacke, vorzugsweise kathodische Elektrotauchlacke enthalten derartige Vernetzungsmittel.

Ganz besonders vorteilhaft einsetzbare Beschichtungsstoffe resultieren daher, wenn das polymere Reibharz und der Emulgator (EQ) in der Gegenwart mindestens eines hydrophoben, das heißt im Wesentlichen wasserunlöslichen Vernetzungsmittels (hierin auch als Vernetzer bezeichnet) vermischt werden. In einer weiteren Ausgestaltung der Pigment und/oder Füllstoff enthaltenden Formulierungen können die Vernetzungsmittel auch mit den Pigment und/oder Füllstoff enthaltenden Formulierungen nachträglich vermischt werden.

Vorzugsweise enthalten die im Wesentlichen wasserunlöslichen Vernetzungsmittel reaktive funktionelle Gruppen, die mit den in den in den polymeren Reibharzen und/oder dem Emulgator (EQ) vorhandenen funktionellen Gruppen bei erhöhten Temperaturen Vernetzungsreaktionen eingehen können (sogenannte Einkomponentensysteme). Die resultierenden Pigment und/oder Füllstoff enthaltenden Formulierungen enthalten die Vernetzungsmittel in besonders guter Verteilung, weswegen die Vernetzungsreaktionen später in den Beschichtungsmitteln besonders gut ablaufen, so dass weniger Vernetzungsmittel verwendet werden können als in den entsprechenden Dispersionen, die nach Verfahren des Standes der Technik hergestellt worden sind.

Beispiele besonders gut geeigneter hydrophober, das heißt im wesentlichen wasserunlöslicher Vernetzungsmittel sind blockierte Polyisocyanate, Tris(alkoxycarbonylamino)triazine oder Aminoplastharze, ganz besonders gut geeignet sind blockierte Polyisocyanate.

### Blockierte Polyisocyanate

Beispiele geeigneter zu blockierender organischer Polyisocyanate sind insbesondere die sogenannten Lackpolyisocyanate mit aliphatisch, cycloaliphatisch, araliphatisch und/oder aromatisch gebundenen Isocyanatgruppen. Bevorzugt werden Polyisocyanate mit im Mittel 2 bis 5, besonders bevorzugt 2,5 bis 5 Isocyanatgruppen pro Molekül eingesetzt.

Beispiele besonders geeigneter zu blockierender Polyisocyanate sind Isocyanurat-, Biuret-, Allophanat-, Iminooxadiazindion-, Urethan-, Harnstoff-und/oder Uretdiongruppen aufweisende Polyisocyanate.

Urethangruppen aufweisende Polyisocyanate werden beispielsweise durch Umsetzung eines Teils der Isocyanatgruppen mit Polyolen, wie beispielsweise Trimethylolpropan und Glycerin, erhalten. Wird beispielsweise Trimethylolpropan mit 3 Äquivalenten eines Diisocyanats umgesetzt, so resultiert im Wesentlichen ein Triisocyanat.

Vorzugsweise werden zur Herstellung der zu blockierenden Polyisocyanate aliphatische oder cycloaliphatische Diisocyanate, insbesondere Hexamethylendiisocyanat, Isophorondiisocyanat, Dicyclohexylmethan-2,4'-diisocyanat, Dicyclohexylmethan-4,4'-diisocyanat, Diphenylmethan-2,4'-diisocyanat, Diphenylmethan-4,4'-diisocyanat, Toluol-2,4-diisocyanat und Toluol-2,6-diisocyanat, Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis (9-isocyanatononyl)-1-pentyl-cyclohexan; oder 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan oder 1,2-, 1,4- oder 1,3-Bis(4-isocyanatobut-1 -yl)cyclohexan, 1,8-Diisocyanato-4-isocyanatomethyl-octan, 1,7-Diisocyanato-4-isocyanatomethylheptan oder 1-Isocyanato-2- (3-isocyanatopropyl)cyclohexan oder Mischungen hieraus eingesetzt.

Die Diisocyanate können als solche ebenfalls zur Herstellung blockierter Diisocyanate verwendet werden. Vorzugsweise werden sie indes nicht alleine, sondern im Gemisch mit den Polyisocyanaten, die im Mittel mehr als zwei Isocyanatgruppen aufweisen verwendet.

Ganz besonders bevorzugt werden Gemische aus Uretdion- und/oder Isocyanuratgruppen und/oder Allophanatgruppen aufweisenden Polyisocyanaten auf Basis von Diphenylmethan-2,4'-diisocyanat, Diphenylmethan-4,4'-diisocyanat, Toluol-2,4-diisocyanat und/oder Toluol-2,6-diisocyanat sowie den Addukten vorstehender Diisocyanate an Polyole, insbesondere Triole wie beispielsweise Trimethylolpropan und Glycerin.

Beispiele geeigneter Blockierungsmittel für die Herstellung der blockierten Dibeziehungsweise Polyisocyanate sind die aus der US-Patentschrift US-A-4,444,954 bekannten Blockierungsmittel wie beispielsweise:
b1) Phenole wie Phenol, Cresol, Xylenol, Nitrophenol, Chlorophenol, Ethylphenol, t-Butylphenol, Hydroxybenzoesäure, Ester dieser Säure oder 2,5- di-tert.-Butyl-4-hydroxytoluol;
b2) Lactame, wie epsilon-Caprolactam, delta-Valerolactam, gamma-Butyrolactam oder beta-Propiolactam;
b3) aktive methylenische Verbindungen, wie Diethylmalonat, Dimethylmalonat, Acetessigsäureethyl- oder -methylester oder Acetylaceton;
b4) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonopropylether, Ethylenglykolmonobutylether, Butyldiglykol, Propylenglykol, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;
b5) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
b6) Säureamide wie Acetoanilid, Acetoanisidinamid, Acrylamid, Methacrylamid, Essigsäureamid, Stearinsäureamid oder Benzamid;
b7) Imide wie Succinimid, Phthalimid oder Maleimid;
b8) Amine wie Diphenylamin, Phenylnaphthylamin, Xylidin, N-Phenylxylidin, Carbazol, Anilin, Naphthylamin, Butylamin, Dibutylamin oder Butylphenylamin;
b9) Imidazole wie Imidazol oder 2-Ethylimidazol;
b10) Harnstoffe wie Harnstoff, Thioharnstoff, Ethylenharnstoff, Ethylenthioharnstoff oder 1,3-Diphenylharnstoff;
b11) Carbamate wie N-Phenylcarbamidsäurephenylester oder 2-Oxazolidon;
b12) Imine wie Ethylenimin;
b13) Oxime wie Acetonoxim, Formaldoxim, Acetaldoxim, Acetoxim, Methylethylketoxim, Diisobutylketoxim, Diacetylinonoxim, Benzophenonoxim oder Chlorohexanonoxime;
b14) Salze der schwefeligen Säure wie Natriumbisulfit oder Kaliumbisulfit;
b15) Hydroxamsäureester wie Benzylmethacrylohydroxamat (BMH) oder Allylmethacrylohydroxamat; oder
b16) substituierte Pyrazole, insbesondere Dimethylpyrazol, oder Triazole; sowie
b17) Gemische der vorgenannten Blockierungsmittel.

### Aminoplastharze

Beispiele für geeignete vollständig veretherte Aminoplastharze sind Melaminharze, Guanaminharze oder Harnstoffharze. Des Weiteren kommen die üblichen und bekannten Aminoplastharze in Betracht, deren Methylol- und/oder Methoxymethylgruppen zum Teil mittels Carbamat- oder Allophanatgruppen defunktionalisiert sind. Vernetzungsmittel dieser Art werden in den Patentschriften US 4 710 542 A1 und EP 0 245 700 B1 sowie in dem Artikel von B. Singh et al. "Carbamylmethylated Melamines, Novel Crosslinkers for the Coatings Industry" in Advanced Organic Coatings Science and Technology Series, 1991, Band 13, Seiten 193 bis 207, beschrieben.

### Tris(alkoxycarbonylamino)triazine

Geeignete Tris(alkoxycarbonylamino)triazine werden beispielsweise in den Patentschriften US 4,939,213 A1, US 5,084,541 A1 oder der EP 0624577 A1 beschrieben. Insbesondere können Tris(methoxy-, Tris(butoxy- und/oder Tris(2-ethylhexoxycarbonylamino)triazine verwendet werden.

Von den vorstehend beschriebenen Vernetzungsmitteln bieten die blockierten Polyisocyanate besondere Vorteile und werden deshalb erfindungsgemäß ganz besonders bevorzugt verwendet.

### Dispergieren der Pigment und/oder Füllstoff enthaltenden Formulierung

In den Pigment und/oder Füllstoff enthaltenden Formulierungen werden die Pigmente und/oder Füllstoffe mit dem Emulgator (EQ) und vorzugsweise mit dem Polymer, welches als Reibharz dient, vermischt. Das Vermischen geht mit einer Dispergierung der Pigmente und/oder Füllstoffe einher und hat das Ziel Dispersionen zu erhalten, die einen möglichst hohen Anteil an Pigment- und/oder Füllstoff-Primärteilchen enthalten.

Die Vermischung dient somit einer weitestgehend homogenen Dispergierung der Pigmente und/oder Füllstoffe. Durch einfaches Rühren werden dabei bereits sogenannte Konglomerate, das heißt lockere Zusammenballungen von Pigment- und/oder Füllstoffagglomeraten zerstört. Das Aufbrechen der Agglomerate, das heißt räumlich zusammenhaftender Pigment- und/oder Füllstoffaggregate, bedarf häufig bereits höherer Scherkräfte. Die Aggregate wiederum, die aus durch Oberflächenkräfte fest zusammenhaftenden Pigmentprimärpartikeln bestehen, werden üblicherweise nur durch starke Scherkräfte zerkleinert. Ziel des Dispergiervorgangs ist es die eingesetzten Pigmente und/oder Füllstoffe soweit zu Dispergieren, dass ein möglichst hoher Anteil an Primärteilchen, das heißt einzelnen Pigmentteilchen erzeugt wird. Ein anschaulicher Vergleich von Primärteilchen, Aggregaten und Agglomeraten ist beispielsweise der DIN 53206, Blatt 1 entnehmbar. Unter dem Begriff "Zerkleinern" wie er hierin verwendet wird, wird ein Aufbrechen von Konglomeraten, Agglomeraten und/oder Aggregaten verstanden, nicht etwa ein weiteres Zerkleinern der Primärteilchen.

Um eine möglichst schonende Vermischung und Dispergierung der Pigmente und/oder Füllstoffe zu erreichen wird häufig eine mehrstufige Vermischung unter Einbringung immer höherer Scherkräfte durchgeführt.

Es empfiehlt sich die Dispersion mit den einzuarbeitenden Feststoffen, insbesondere den Pigmenten und/oder Füllstoffen zunächst durch einfaches Rühren zu vermischen. In einer vorteilhaften Ausgestaltung können der Dispersion zuvor oder während des Rührens noch ein oder mehrere Hilfsstoffe, insbesondere vom Emulgator (EQ) verschiedene Netz- und/oder Dispergiermittel und/oder organische Lösemittel zugefügt werden. Es gibt eine Reihe von Lösemitteln, die die Dispergierung begünstigen, darunter zählen insbesondere Monoalkohole und Glykole. Netzmittel werden insbesondere bei einigen schlecht benetzbaren organischen Pigmenten erfolgreich eingesetzt.

Vorzugsweise erfolgt anschließend eine Vordispergierung mittels eines sogenannten Dissolvers, hierbei handelt es sich um schnelllaufende Rührscheibenaggregate. Die Vordispergierung dient üblicherweise der Erzielung großer Durchsatzleistungen für die nachgeschalteten Hauptdispergieraggregate. Bei leicht dispergierbaren Pigmenten wie beispielsweise Titandioxidpigmenten kann jedoch auch auf eine Vordispergierung gänzlich verzichtet werden. Aus grobdispersen Systemen werden durch die Vordispergierung bereits sogenannte kolloid-disperse Systeme, die dadurch gekennzeichnet sind, dass die Feststoffteilchen aufgrund ihrer geringen Größe unter Schwerkrafteinwirkung nicht sedimentieren. Bei der Vordispergierung erfolgt eine Benetzung der Oberfläche der Feststoffteilchen durch das flüssige Medium und eine teilweise mechanische Zerkleinerung der Konglomerate, Agglomerate und Aggregate zu kleineren Teilchen. Durch die vorzugsweise Verwendung von Netz- und/oder Dispergiermitteln bei der Vordispergierung erfolgt auch eine Stabilisierung der kleineren Teilchen gegenüber einer Reagglomeration.

Dissolver können nicht nur zur Vordispergierung, sondern auch zur Einarbeitung von Mattierungsmitteln bei geringeren Scherraten, oder in einigen Fällen zur Hauptdispergierung bei höheren Scherraten, eingesetzt werden.

Typische Betriebsdaten sind für das Einarbeiten von Mattierungsmitteln Umfangsgeschwindigkeiten von 10 bis 20 m/s, wie beispielsweise 16 m/s, bei Dispergierzeiten von 5 bis 10 min und Temperaturen von Raumtemperatur (25 °C) bis 35 °C. Die Umfangsgeschwindigkeit errechnet sich aus dem Scheibenumfang der Rührscheiben und der Zahl der Umdrehungen pro Zeiteinheit. Für die Vordispergierung übliche Umfangsgeschwindigkeiten liegen etwa 5 m/s höher, bei 15 bis 25 m/s, wie beispielsweise 21 m/s, bei Dispergierzeiten von 10 bis 20 min und Temperaturen im Bereich von 35 bis 50 °C. Verwendet man Dissolver auch zur Hauptdispergierung, so liegen die Umfangsgeschwindigkeiten wiederum um etwa 5 m/s höher als bei der Vordispergierung, beispielweise in einem Bereich von 20 bis 30 m/s, wie beispielsweise 25 m/s, bei Dispergierzeiten im Bereich von 20 bis 40 min und Temperaturen im Bereich von 50 bis 70 °C. Vorgenannte Werte können als generelle Anhaltspunkte angesehen werden, vorzugsweise gelten die Bereiche für Chargengrößen von 500 bis 1000 kg.

Verschiedene Dissolvertypen werden eingehend mit ihren entsprechenden typischen Betriebsdaten in Kittel, "Lehrbuch der Lacke und Beschichtungen", Bd. 8, 2004, S. 47-50 beschrieben.

Für besonders hochwertige buntpigmentierte Lacke reicht die Dispergierung mit einem Dissolver nicht unbedingt in allen Fällen aus. Die Hauptdispergierung wird dann beispielsweise in sogenannten Dreiwalzen, Kugelmühlen oder Rührwerksmühlen durchgeführt. Unter diesen besonders geeignet sind Kugelmühlen und vor allem Rührwerksmühlen. Alle drei vorgenannten Mühlentypen werden eingehend mit ihren entsprechenden typischen Betriebsdaten in Kittel, "Lehrbuch der Lacke und Beschichtungen", Bd. 8, 2004, S. 53ff beschrieben.

Der Dispergierzustand der erfindungsgemäßen Pigment und/oder Füllstoff enthaltenden Formulierungen kann durch Bestimmung des Grindometerwerts ermittelt werden. Es handelt sich hierbei um eine einfache Bestimmung der Kornfeinheit von Mahlgütern, wobei der Anteil des sogenannten Oberkorns gemessen wird. Die Mess- und Beurteilungsmethode wird im Beispielteil näher erläutert und entspricht der DIN 53203.

Um 100 g eines Pigments oder Füllstoffs in einem Dissolver zu dispergieren bedarf es in Abhängigkeit der Beschaffenheit des Pigments oder Füllstoffs konventionell 30 bis 1000 g an Bindemittel. Während sich beispielsweise Titandioxid sehr gut in geringen Mengen an Bindemitteln dispergieren lässt, beispielsweise 40 bis 60 g Bindemittel auf 100 g Titandioxid, bedarf es zur Dispergierung bestimmter Kieselsäuren wie beispielsweise bestimmte Aerosile bis zu 900 g Bindemittel pro 100 g Aerosil. Diesbezügliche Informationen sind auch dem Römpp Lexikon Lacke und Druckfarben, 1998, Seite 369, Stichwort "Mahlgut" entnehmbar.

### Wässrige Zubereitungen enthaltend die Pigment und/oder Füllstoff enthaltenden Formulierungen

Soweit der Begriff "wässrig" hierin verwendet wird bedeutet dieser, dass der flüchtige Anteil, d.h. der bei einer Trocknung bei einer Temperatur von 180 °C über 30 min flüchtige Anteil einer Zusammensetzung vorzugsweise zu mehr als 50 Gew.-% aus Wasser besteht, besonders bevorzugt zu mehr als 70 Gew.-% und ganz besonders bevorzugt zu mehr als 90 Gew.-% aus Wasser besteht.

Die erfindungsgemäßen Pigment und/oder Füllstoff enthaltenden Formulierungen dienen der Herstellung wässriger Zubereitungen, insbesondere der Herstellung von Beschichtungsstoffen. Weiterer Gegenstand der vorliegenden Erfindung sind somit wässrige Zubereitungen, insbesondere Beschichtungsmittelzusammensetzungen, die die erfindungsgemäßen Pigment und/oder Füllstoff enthaltenden Formulierungen enthalten.

Die erfindungsgemäßen wässrigen Zubereitungen sind bevorzugt Beschichtungsmittelzusammensetzungen, ganz besonders bevorzugt kathodisch abscheidbare Elektrotauchlacke. Für diese Verwendungszwecke können den erfindungsgemäß zu verwendenden Pigment und/oder Füllstoff enthaltenden Formulierungen vor, während und/oder nach ihrer Herstellung noch mindestens ein übliches Lackadditiv in wirksamen Mengen zugesetzt werden. Der Fachmann kann solche Lackadditive anhand seines allgemeinen Fachwissens identifizieren. Vorzugsweise werden die genannten Lackadditive nach der Herstellung der Pigment und/oder Füllstoff enthaltenden Formulierung zugesetzt.

Beispiele geeigneter Additive sind thermisch härtbare Reaktivverdünner, niedrig siedende und/oder hochsiedende organische Lösemittel, UV-Absorber, Lichtschutzmittel, Radikalfänger, thermolabile radikalische Initiatoren, Katalysatoren für die Vernetzung, Entlüftungsmittel, Slipadditive, Polymerisationsinhibitoren, Entschäumer, Emulgatoren, Netzmittel, Haftvermittler, Verlaufmittel, filmbildende Hilfsmittel, rheologiesteuernde Additive oder Flammschutzmittel. Weitere Beispiele geeigneter Lackadditive werden in dem Lehrbuch Lackadditive von Johan Bieleman, Wiley-VCH, Weinheim, New York, 1998, beschrieben.

Sollen die erfindungsgemäßen wässrigen Zubereitungen, insbesondere Beschichtungsstoffe auch mit aktinischer Strahlung härtbar sein (Dual Cure), enthalten sie vorzugsweise Additive, die mit aktinischer Strahlung härtbar sind. Bei der aktinischen Strahlung kann es sich um elektromagnetische Strahlung wie nahes Infrarot (NIR), sichtbares Licht, UV-Licht oder Röntgenstrahlung oder um Korpuskularstrahlung wie Elektronenstrahlung handeln. Beispiele geeigneter mit aktinischer Strahlung härtbarer Additive sind aus dem deutschen Patent DE 197 09 467 C1 bekannt.

Methodisch weist die Applikation der erfindungsgemäßen wässrigen Zubereitungen, insbesondere der Beschichtungsstoffe keine Besonderheiten auf, sondern kann durch alle üblichen Applikationsmethoden, wie Spritzen, Rakeln, Streichen, Gießen, Tauchen, Traufen oder Walzen oder mittels der Elektrotauchlackierung, insbesondere der kathodischen Elektrotauchlackierung erfolgen.

Als Substrate kommen alle zu lackierenden Oberflächen, die durch eine Härtung der hierauf befindlichen Lackierungen unter Anwendung von Hitze sowie gegebenenfalls von aktinischer Strahlung nicht geschädigt werden, in Betracht; das sind insbesondere Metalle, Kunststoffe, Holz, Keramik, Stein, Textilen, Faserverbunde, Leder, Glas, Glasfasern, Glas- und Steinwolle, mineral- und harzgebundene Baustoffe, wie Gips-und Zementplatten oder Dachziegel, sowie Verbunde dieser Materialien. Demnach ist der erfindungsgemäße Beschichtungsstoff auch für Anwendungen außerhalb der Automobillackierung geeignet. Hierbei kommt er insbesondere für die Lackierung von Möbeln und die industrielle Lackierung, inklusive Bandbeschichtung, Behälterbeschichtung und die Imprägnierung oder Beschichtung elektrotechnischer Bauteile, in Betracht. Im Rahmen der industriellen Lackierungen eignet er sich für die Lackierung praktisch aller Teile für den privaten oder industriellen Gebrauch wie Radiatoren, Haushaltsgeräte, Kleinteile aus Metall wie Schrauben und Muttern, Radkappen, Felgen, Emballagen oder elektrotechnische Bauteile wie Motorwicklungen oder Transformatorwicklungen.

Im Falle elektrisch leitfähiger Substrate können die erfindungsgemäßen wässrigen Zubereitungen oder die erfindungsgemäßen Beschichtungsmittelzusammensetzungen vorzugsweise mittels der Elektrotauchlackierung, besonders bevorzugt der kathodischen Elektrotauchlackierung aufgebracht werden.

Weiterer Gegenstand der vorliegenden Erfindung ist daher eine Elektrotauchlackzusammensetzung (kurz auch als Elektrotauchlack bezeichnet), welche die erfindungsgemäßen Pigment und/oder Füllstoff enthaltenden Formulierungen umfasst. Eine solche Elektrotauchlackzusammensetzung ist insbesondere für die kathodische Elektrotauchlackierung (KTL) geeignet. Somit ist ein weiterer Gegenstand der vorliegenden Erfindung die Verwendung der erfindungsgemäßen Pigment und/oder Füllstoff enthaltenden Formulierungen in Elektrotauchlackzusammensetzungen, insbesondere kathodisch abscheidbaren Elektrotauchlackzusammensetzungen.

Die erfindungsgemäßen Elektrotauchlacke weisen vorzugsweise einen Festkörpergehalt von 5 bis 50, bevorzugt 5 bis 35 Massen-% auf. Hierbei ist unter Festkörper der Anteil eines Elektrotauchlacks zu verstehen, der nach Trocknung bei 180 °C für 30 min zurückbleibt.

Die erfindungsgemäßen Elektrotauchlacke enthalten als Bindemittel mindestens die in den erfindungsgemäßen Pigment und/oder Füllstoff enthaltenden Formulierungen als Reibharze vorzugsweise enthaltenen Polymere sowie die Emulgatoren (EQ) in freier oder in die Polymere einpolymerisierter Form. Unter dem Begriff "Bindemittel" wird hierin entsprechend der EN ISO 4618:2006 (deutsche Fassung) der nichtflüchtige Anteil einer Pigment und/oder Füllstoff enthaltenden Formulierung oder eines Beschichtungsmittels wie beispielsweise eines Elektrotauchlacks abzüglich der enthaltenen Füllstoffe und Pigmente verstanden.

Vorzugsweise enthalten die in den erfindungsgemäßen Pigment und/oder Füllstoff enthaltenden Formulierungen enthaltenen Polymere, die als Reibharz dienen, bereits reaktive funktionelle Gruppen, die mit in obengenannten Vernetzungsmitteln vorhandenen komplementären reaktiven funktionellen Gruppen thermische Vernetzungsreaktionen eingehen können. Bereits oben genannte Beispiele geeigneter reaktiver funktioneller Gruppen sind Hydroxylgruppen, Thiolgruppen und primäre und sekundäre Aminogruppen, insbesondere Hydroxylgruppen.

Besonders bevorzugt enthalten die erfindungsgemäß als Reibharze eingesetzten Polymere mindestens eine Art von kationischen und/oder potentiell kationischen Gruppen. Potentiell kationische Gruppen sind beispielsweise zunächst ungeladene primäre, sekundäre oder tertiäre Aminogruppen, die durch Protonierung mit anorganischen oder vorzugsweise organischen Säuren in Ammoniumgruppen überführt werden können. Da kathodische Elektrotauchlacke üblicherweise einen pH-Wert von 4,5 bis 6,5 aufweisen, der üblicherweise durch Zusatz von Säuren eingestellt wird, ist der pH-Wert der Elektrotauchlacke in der Regel ausreichend um potentiell kationische Gruppen in kationsche Gruppen zu überführen. Beispiele geeigneter Säuren für die potentiell kationischen Gruppen sind anorganische und organische Säuren wie Schwefelsäure, Phosphorsäure, Ameisensäure, Essigsäure, Milchsäure, Propionsäure, alpha-Methylolpropionsäure, Dimethylolpropionsäure, gamma-Hydroxypropionsäure, Glykolsäure, Weinsäure, Äpfelsäure, Zitronensäure, Zuckersäuren, Salicylsäure, 2,4-Dihydroxybenzoesäure oder Sulfonsäuren, wie Amidosulfonsäuren und Alkansulfonsäuren, wie zum Beispiel Methansulfonsäure, insbesondere Ameisensäure, Essigsäure oder Milchsäure. Der Einsatz von Salzsäure ist nicht bevorzugt und in einer bevorzugten Ausführungsform ausgeschlossen.

Weitere Beispiele potentiell kationischer Gruppen, die durch Neutralisationsmittel und/oder Quaternisierungsmittel in Kationen überführt werden können, sind sekundäre Sulfidgruppen oder tertiäre Phosphingruppen.

Beispiele geeigneter kationischer Gruppen sind quarternäre Ammoniumgruppen, tertiäre Sulfoniumgruppen oder quarternäre Phosphoniumgruppen, vorzugsweise quarternäre Ammoniumgruppen oder tertiäre Sulfoniumgruppen, insbesondere aber quarternäre Ammoniumgruppen, wie sie insbesondere in den Emulgatoren (EQ) vorkommen.

Neben den vorzugsweise als Reibharze enthaltenen Polymeren können weitere für Elektrotauchlacke typische Bindemittel im erfindungsgemäßen Elektrotauchlack enthalten sein. Weitere Bindemittel für Elektrotauchlacke sind aus den Druckschriften EP 0 082 291 A1 , EP 0 234 395 A1 , EP 0 227 975 A1 , EP 0 178 531 A1 , EP 0 333 327 , EP 0 310 971 A1 , EP 0 456 270 A1 , US 3,922,253 A, EP 0 261 385 A1 , EP 0 245 786 A1 , EP 0 414 199 A1 , EP 0 476 514 A1 , EP 0 817 684 A1 , EP 0 639 660 A1 , EP 0 595 186 A1 , DE 41 26 476 A1 , WO 98/33835 , DE 33 00 570 A1 , DE 37 38 220 A1 , DE 35 18 732 A1 oder DE 196 18 379 A1 bekannt. Hierbei handelt es sich vorzugsweise um primäre, sekundäre, tertiäre oder quarternäre Amino- oder Ammoniumgruppen und/oder tertiäre Sulfoniumgruppen enthaltende Harze mit Aminzahlen vorzugsweise zwischen 20 und 250 mg KOH/g und einem gewichtsmittleren Molekulargewicht von 300 bis 10000 Dalton. Insbesondere werden Amino(meth)acrylatharze, Aminoepoxidharze, Aminopolyurethanharze, aminogruppenhaltige Polybutadienharze oder modifizierte Epoxidharz-Kohlendioxid-Amin-Umsetzungsprodukte verwendet. Ganz besonders bevorzugte Epoxy-Amin-Harze sind die aus der WO-A-2004/007443 bekannten und auch im experimentellen Teil der vorliegenden Erfindung eingesetzten Harze. Es kann sich dabei auch um die gleichen Polymere handeln, die als Reibharze eingesetzt werden können.

Als Vernetzungsmittel kommen alle üblichen und bekannten Vernetzungsmittel in Betracht, die geeignete komplementäre reaktive funktionelle Gruppen enthalten. Vorzugsweise werden die Vernetzungsmittel aus der bereits oben beschriebenen Gruppe der Vernetzungsmittel gewählt.

Die erfindungsgemäßen wässrigen Zubereitungen, und insbesondere die Elektrotauchlacke enthalten vorzugsweise Metallverbindungen, in welchen das Metall in Form eines Kations vorliegt, ganz besonders bevorzugt Bismutverbindungen. Derartige Metallverbindungen und insbesondere Bismutverbindungen sind ganz besonders bevorzugt dann enthalten, wenn die erfindungsgemäß enthaltenen Emulgatoren (EQ) in beta-Stellung zum Stickstoffatom in der allgemeinen Formel der Emulgatoren (EQ) eine Hydroxylgruppe, Thiolgruppe oder primäre oder sekundäre Aminogruppe tragen. Die in beta-Stellung befindlichen vorgenannten Gruppen begünstigen die Vernetzungsdichte der Beschichtung. Vorzugsweise enthalten die wässrigen Zubereitungen, insbesondere die kathodisch abscheidbaren Elektrotauchlacke mindestens 30 ppm, besonders bevorzugt mindestens 100 ppm, ganz besonders bevorzugt mindestens 200 ppm und insbesondere mindestens 250 ppm Bismut in gelöster Form, bezogen auf das Gesamtgewicht der wässrigen Zubereitung. Der Gehalt an gelöstem Bismut sollte vorzugsweise 20000 ppm, besonders bevorzugt 10000 ppm nicht überschreiben. Zusätzlich oder alternativ zum gelösten Bismut können selbstverständlich die oben angesprochenen Bismutpigmente eingesetzt werden.

Darüber hinaus können die erfindungsgemäßen wässrigen Zubereitungen, insbesondere die Elektrotauchlacke noch mindestens einen üblichen und bekannten Zusatzstoff, ausgewählt aus der Gruppe der bereits oben allgemein beschriebenen Additive, in wirksamen Mengen enthalten.

Die erfindungsgemäßen wässrigen Zubereitungen, insbesondere die Elektrotauchlacke werden durch Vermischen der vorgenannten Bestandteile hergestellt. Die Bestandteile können homogenisiert werden. Gegebenenfalls können die erfindungsgemäßen Elektrotauchlacke mit Hilfe üblicher und bekannter Mischverfahren und Vorrichtungen wie Rührkesseln, Rührwerksmühlen, Extrudern, Knetern, Ultraturrax-Apparaten, Inline-Dissolvern, statischen Mischern, Mikromischern, Zahnkranzdispergatoren, Druckentspannungsdüsen und/oder Microfluidizern hergestellt werden.

Die erfindungsgemäßen wässrigen Zubereitungen, insbesondere die Elektrotauchlacke werden insbesondere zur kathodischen Tauchlackierung verwendet. Die erfindungsgemäßen wässrigen Zubereitungen, insbesondere die Elektrotauchlacke können üblicherweise auf elektrisch leitfähigen, beispielsweise elektrisch leitfähigen oder leitfähig gemachten, beispielsweise durch Metallisierung elektrisch leitfähig gemachten Kunststoffsubstraten oder insbesondere metallischen Substraten kathodisch abgeschieden werden.

Die Erfindung betrifft daher auch ein Verfahren zur kathodischen Abscheidung der erfindungsgemäßen wässrigen Zubereitungen, insbesondere der Elektrotauchlacke auf derartigen Substraten. Das Verfahren weist keine methodischen Besonderheiten auf. Weiterhin lassen sich die erfindungsgemäßen Elektrotauchlacke zur Herstellung von Grundierungsschichten durch kathodische Tauchlackierung von Substraten mit elektrisch leitfähigen Oberflächen verwenden.

Als metallische Substrate können Teile aus sämtlichen üblichen Metallen, beispielsweise die in der Automobilindustrie üblichen Metallteile, insbesondere Automobilkarossen und deren Teile, eingesetzt werden. Demnach können die erfindungsgemäßen Elektrotauchlacke auch bei der Lackierung von Kraftfahrzeugen oder deren Teilen verwendet werden. Ganz besonders bevorzugte Substrate sind Aluminiumsubstrate. Die Substrate können durch Aufbringen einer Konversionsschicht vorbehandelt sein, beispielsweise phosphatiert oder chromatiert vorliegen. In einer bevorzugten Ausführungsform der Erfindung werden die Substrate weder phosphatiert noch chromatiert.

Bei der kathodischen Abscheidung der wässrigen Zusammensetzungen wird das Substrat in die wässrige Zusammensetzung getaucht und als Kathode geschaltet. Vorzugsweise erfolgt die Abscheidung aus der wässrigen Zusammensetzung mindestens zweistufig, wobei in einer ersten Stufe eine Spannung im Bereich von 1 bis 50 V und in der zweiten Stufe eine Spannung von 50 bis 400 V angelegt wird unter der Maßgabe, dass in der zweiten Stufe die Spannung mindestens 10 V über der Spannung der ersten Stufe liegt. Die Spannung wird in jeder Stufe vorzugsweise mindestens 10 Sekunden bis maximal 300 Sekunden aufrecht erhalten. Als Substrate werden vorzugsweise Aluminiumsubstrate eingesetzt.

Der kathodischen Abscheidung können vor der Aushärtung der Beschichtung weitere Behandlungsstufen nachgeschaltet werden, beispielsweise Spülungen mit Wasser und/oder Ultrafiltrat oder in einer besonders bevorzugten Ausführungsform des Verfahrens eine sogenannte Sol-Gel-Nachspülung mit einer Sol-Gel-Zusammensetzung.

Dem Fachmann sind die Begriffe "Sol-Gel-Zusammensetzung", "Sol-Gel" sowie die Herstellung von Sol-Gel-Zusammensetzungen und Sol-Gelen bekannt, beispielsweise aus D. Wang et al., Progress in Organic Coatings 2009, 64, 327-338 oder S. Zheng et al., J. Sol-Gel. Sci. Technol. 2010, 54, 174-187.

Unter einer wässrigen "Sol-Gel-Zusammensetzung" im Sinne der vorliegenden Erfindung wird vorzugsweise eine wässrige Zusammensetzung verstanden, zu deren Herstellung wenigstens eine Ausgangsverbindung, welche wenigstens ein Metallatom und/oder Halbmetallatom wie beispielsweise M¹ und/oder M² und wenigstens zwei hydrolysierbare Gruppen wie beispielsweise zwei hydrolysierbare Gruppen X¹ aufweist, und welche gegebenenfalls ferner wenigstens einen nicht hydrolysierbaren organischen Rest wie beispielsweise R¹ aufweist, mit Wasser unter Hydrolyse und Kondensation umgesetzt wird. Die wenigstens zwei hydrolysierbaren Gruppen sind dabei vorzugsweise jeweils direkt an das in der wenigstens einen Ausgangsverbindung enthaltene wenigstens eine Metallatom und/oder wenigstens eine Halbmetallatom jeweils mittels einer Einfachbindung gebunden. Aufgrund der Gegenwart des nicht hydrolysierbaren organischen Restes wie beispielsweise R¹ kann eine solche erfindungsgemäß eingesetzte Sol-Gel-Zusammensetzung auch als "Sol-Gel-Hybrid-Zusammensetzung" bezeichnet werden.

Vorzugsweise ist die im optionalen Sol-Gel-Spülschritt erfindungsgemäß einsetzbare wässrige Sol-Gel-Zusammensetzung erhältlich durch Umsetzung
wenigstens einer Verbindung Si(X¹)₃(R¹),
   wobei R¹ darin für einen nicht hydrolysierbaren organischen Rest steht, welcher wenigstens eine reaktive funktionelle Gruppe ausgewählt aus der Gruppe bestehend aus primären Amino-Gruppen, sekundären Amino-Gruppen, Epoxid-Gruppen, und Gruppen, die eine ethylenisch ungesättige Doppelbindung aufweisen, aufweist,
   insbesondere wenigstens einer Verbindung Si(X¹)₃(R¹), wobei R¹ darin für einen nicht hydrolysierbaren organischen Rest steht, welcher wenigstens eine Epoxid-Gruppe als eine reaktive funktionelle Gruppe, aufweist, und worin X¹ für eine hydrolysierbare Gruppe wie beispielsweise eine O-C₁₋₆-Alkyl-Gruppe steht und zudem gegebenenfalls wenigstens einer weiteren Verbindung Si(X¹)₃(R¹), wobei R¹ darin für einen nicht hydrolysierbaren organischen Rest steht, welcher wenigstens eine reaktive funktionelle Gruppe ausgewählt aus der Gruppe bestehend aus primären Amino-Gruppen und sekundären Amino-Gruppen, und worin X¹ für eine hydrolysierbare Gruppe wie beispielsweise eine O-C₁₋₆-Alkyl-Gruppe steht, aufweist,
und gegebenenfalls wenigstens einer Verbindung Si(X¹)₄, worin X¹ für eine hydrolysierbare Gruppe wie beispielsweise eine O-C₁₋₆-Alkyl-Gruppe steht,
und gegebenenfalls wenigstens einer Verbindung Si(X¹)₃(R¹),
   wobei R¹ darin für einen nicht hydrolysierbaren organischen Rest steht, welcher keine reaktive funktionelle Gruppe aufweist wie beispielsweise einen C₁₋₁₀-Alkylrest, und worin X¹ für eine hydrolysierbare Gruppe wie beispielsweise einer O-C₁₋₆-Alkyl-Gruppe steht,
und gegebenenfalls wenigstens einer Verbindung Zr(X¹)₄, worin X¹ für eine hydrolysierbare Gruppe wie beispielsweise einer O-C₁₋₆-Alkyl-Gruppe steht,
mit Wasser.

Auch die Härtung der applizierten erfindungsgemäßen Beschichtungsstoffe, insbesondere Elektrotauchlacke weist keine methodischen Besonderheiten auf, sondern erfolgt nach den üblichen und bekannten thermischen Methoden wie Erhitzen in einem Umluftofen oder Bestrahlen mit IR-Lampen, die im Falle von Dual Cure noch durch die Bestrahlung mit aktinischer Strahlung ergänzt werden kann. Hierbei können Strahlenquellen wie Quecksilberhoch- oder -niederdruckdampflampen, welche gegebenenfalls mit Blei dotiert sind, um ein Strahlenfenster bis zu 405 nm zu öffnen, oder Elektronenstrahlquellen angewandt werden.

Die mit einer kathodischen Elektrotauchlackschicht beschichteten elektrisch leitfähigen Substrate, welche ebenfalls Gegenstand der vorliegenden Erfindung sind, lassen sich mit einer oder mehreren weiteren Lackschichten wie beispielsweise einer oder mehreren Füllerlackschichten, einer oder mehreren Basislackschichten und/oder einer oder mehreren Klarlackschichten beschichten. Derartige Lackaufbauten sind insbesondere aus der Automobillackierung bekannt. In anderen Bereichen kann jedoch auch bereits das Aufbringen einer erfindungsgemäßen Elektrotauchlackschicht ausreichen.

Im Folgenden soll die Erfindung durch Beispiele näher erläutert werden.

### AUSFÜHRUNGSBEISPIELE

Soweit nicht anders angegeben sind Angaben in Teilen als Gewichtsteile zu verstehen.

### Testverfahren

### (1) Kupferbeschleunigte Essigsäure-Salzsprühnebelprüfung gemäß DIN EN ISO 9227 CASS (kurz: CASS-Test)

Die kupferbeschleunigte Essigsäure-Salzsprühnebelprüfung dient der Ermittlung der Korrosionsbeständigkeit einer Beschichtung auf einem Substrat. Die kupferbeschleunigte Essigsäure-Salzsprühnebelprüfung wird gemäß DIN EN ISO 9227 CASS für das mit dem erfindungsgemäßen Verfahren oder mit einem Vergleichsverfahren beschichtete metallische Substrat Aluminium (AA6014 (ALU)) durchgeführt. Die zu untersuchenden Proben werden dabei in einer Kammer, in der bei einer Temperatur von 50 °C kontinuierlich über eine Dauer von 240 Stunden eine 5%ige Kochsalzlösung mit kontrolliertem pH-Wert vernebelt wird, wobei der Salzlösung Kupferchlorid und Essigsäure zugegeben wird. Der Nebel schlägt sich auf den zu untersuchenden Proben nieder und überzieht diese mit einem korrosiv wirkenden Salzwasserfilm.

Die Beschichtung der zu untersuchenden Proben wird noch vor der kupferbeschleunigten Essigsäure-Salzsprühnebelprüfung gemäß DIN EN ISO 9227 CASS mit einem Messerschnitt bis zum Substrat eingeritzt, sodass die Proben hinsichtlich ihres Unterwanderungsgrades gemäß DIN EN ISO 4628-8 untersucht werden können, da das Substrat während der kupferbeschleunigten Essigsäure-Salzsprühnebelprüfung gemäß DIN EN ISO 9227 CASS entlang der Ritzlinie korrodiert. Durch den fortschreitenden Korrosionsvorgang wird die Beschichtung während der Prüfung mehr oder weniger stark unterwandert. Der Unterwanderungsgrad in [mm] ist ein Maß für die Beständigkeit der Beschichtung.

### (2) Grindometerwertbestimmung gemäß DIN 53203

Grindometerblock und Schaber werden visuell auf Unversehrtheit überprüft. Der Grindometerblock wird auf eine ebene rutschsichere Fläche gelegt und unmittelbar vor der Prüfung sauber abgewischt. Dann wird die Probe, die frei von Luftblasen sein muss, auf die tiefste Stelle der Messrinne aufgebracht und mit dem Schaber in etwa einer Sekunde mit leichtem Druck zum flachen Ende der Rinne hin ausgezogen. Das Ablesen muss innerhalb von 3 Sekunden erfolgen; der Grindometerblock wird dabei so zum Licht gehalten, dass die Oberflächenstruktur des aufgezogenen Lackfilms gut zu erkennen ist. Dabei kann mit dem Findernagel der Ablesepunkt auf dem Film markiert werden, einzelne Stippen oder Riefen bleiben unberücksichtigt. Der Ablesepunkt ist dort, wo die aus dem Lackfilm herausragenden Partikel sich zu häufen beginnen. Die Viskosität der zu messenden Probe soll etwa "Streichkonsistenz" besitzen. Frisch dispergiertes Mahlgut muss vor der Messung auf Raumtemperatur (25 °C) abkühlen. Ist die kalte Probe zu viskos, wird sie mit dem im Mahlgut enthaltenen Bindemittel verdünnt. Thixotropes Material wird vor der Messung zweckmäßigerweise mit je einem Teil nicht-thixotropen Bindemittel und einem Teil Lösemittel verrührt. Sind im Mahlgut Luftblasen vorhanden, wird die Probe über ein 100 µm Sieb filtriert. Für Korngrößen von 10 bis 20 µm wird ein "25er Grindometer", für 15 bis 40 µm ein "50er Grindometer" und für Korngrößen von 25 bis 100 µm ein "100er Grindometer" verwendet.

### Herstellung des Emulgators EQ1:

Zunächst wird ein Dimethylethanolammonium-Lactat hergestellt. Dazu werden 511,90 Teile Dimethylethanolamin, 711,9 Teile einer 80 %-igen Milchsäure, 644,2 Teile Butylglykol und 74,8 Teile vollentsalztes Wasser in einem mit einem Rührer und Rückflusskühler ausgestatteten Reaktionsgefäß für 24 Stunden gerührt.

3057,2 Teile Cardolite NC 513 (EEW 532 g/eq) werden in einem Reaktionsgefäß, ausgestattet mit Rührer, Rückflusskühler, Temperatursonde, Stickstoff-Einlass und Tropftrichter auf 60°C unter Rühren erwärmt. Anschließend werden 1942,8 Teile des obigen Dimethylethanolamin-Lactats über 30 min langsam zugetropft. Die Reaktionsmischung wird danach solange gerührt, bis ein MEQ-Säure-Wert (= Milliequivalent-Säurewert) von 0,116 mmol/g erreicht ist.

### Herstellung einer Bismut-freien Pigmentpaste P1 mit dem Emulgator EQ1

In einem Edelstahl-Dissolverbehälter, ausgestattet mit Kühlmantel, werden 38,9 Teile eines konventionellen Reibharzes basierend auf einem mit Amin-Gruppen umgesetztem Epoxid-Präpolymer (CathoGuard® 500 Reibharz, Verkaufsprodukt der Firma BASF Coatings GmbH) zusammen mit 25,6 Teilen vollentsalztem Wasser, 0,1 Teilen Phenoxypropanol und 1,8 Teilen des Emulgators EQ1 mit einer der Behältergröße angepassten Dissolverscheibe auf einem Dissolver (Firma VME-Getzmann GmbH, Modell Dispermat® FM10-SIP) 15 Minuten vorgemischt. Anschließend werden nacheinander unter Rühren 1,5 Teile Deuteron MK-F6 (Verkaufsprodukt der Firma Deuteron GmbH), 0,5 Teile Carbon Black Monarch 120 (Verkaufsprodukt der Firma Cabot Corp.), 0,2 Teile Lanco PEW 1555 (Verkaufsprodukt der Firma Lubrizol Advanced Materials Inc.), 10,7 Teile Aluminiumsilikat ASP 200 (Verkaufsprodukt der Firma BASF SE) und 30,95 Teile Titandioxid R 900-28 (Verkaufsprodukt der Firma E. I. du Pont de Nemours and Company) hinzugefügt. Darauf wird die Mischung für 10 Minuten bei ca. 800 Upm vordissolvert und anschließend mit Mahlperlen aus Zirkondioxid (Silibeads Typ ZY, Durchmesser 1,2 - 1,4 mm) und einem Perlen-Mahlgut-Verhältnis von 1/1 (w/w) bei 2500 Upm solange mit einer der Behältergröße angepassten Teflonscheibe gemahlen, bis eine Feinheit < 12 µm, gemessen mit einem Grindometer, erreicht wird.

### Herstellung einer Bismut-freien Pigmentpaste P2 mit dem Emulgator EQ1

In einem Edelstahl-Dissolverbehälter, ausgestattet mit Kühlmantel, werden 38,9 Teile eines konventionellen Reibharzes basierend auf einem mit Amin-Gruppen umgesetztem Epoxid-Präpolymer (CathoGuard® 500 Reibharz, Verkaufsprodukt der Firma BASF Coatings GmbH) zusammen mit 19,7 Teilen vollentsalztem Wasser, 0,1 Teilen Phenoxypropanol und 5,5 Teilen des Emulgators EQ1 mit einer der Behältergröße angepassten Dissolverscheibe auf einem Dissolver (Firma VME-Getzmann GmbH, Modell Dispermat® FM10-SIP) 15 Minuten vorgemischt. Anschließend werden nacheinander unter Rühren 1,5 Teile Deuteron MK-F6 (Verkaufsprodukt der Firma Deuteron GmbH), 0,5 Teile Carbon Black Monarch 120 (Verkaufsprodukt der Firma Cabot Corp.), 0,2 Teile Lanco PEW 1555 (Verkaufsprodukt der Firma Lubrizol Advanced Materials Inc.), 10,7 Teile Aluminiumsilikat ASP 200 (Verkaufsprodukt der Firma BASF SE) und 30,95 Teile Titandioxid R 900-28 (Verkaufsprodukt der Firma E. I. du Pont de Nemours and Company) hinzugefügt. Darauf wird die Mischung für 10 Minuten bei ca. 800 Upm vordissolvert und anschließend mit Mahlperlen aus Zirkondioxid (Silibeads Typ ZY, Durchmesser 1,2 - 1,4 mm) und einem Perlen-Mahlgut-Verhältnis von 1/1 (w/w) bei 2500 Upm solange mit einer der Behältergröße angepassten Teflonscheibe gemahlen, bis eine Feinheit < 12 µm, gemessen mit einem Grindometer, erreicht wird.

### Herstellung einer Bismut-freien nicht-erfindungsgemäßen Pigmentpaste

In einem Edelstahl-Dissolverbehälter, ausgestattet mit Kühlmantel, werden 38,9 Teile eines konventionellen Reibharzes basierend auf einem mit Amin-Gruppen umgesetztem Epoxid-Präpolymer (CathoGuard® 500 Reibharz, Verkaufsprodukt der Firma BASF Coatings GmbH) zusammen mit 7,5 Teilen vollentsalztem Wasser, 0,1 Teilen Phenoxypropanol und 0,8 Teilen eines Netz- und Dispergiermittels (Disperbyk 110, Verkaufsprodukt der Firma Byk Chemie GmbH) mit einer der Behältergröße angepassten Dissolverscheibe auf einem Dissolver (Firma VME-Getzmann GmbH, Modell Dispermat® FM10-SIP) kurz vorgemischt. Anschließend werden nacheinander unter Rühren 1,5 Teile Deuteron MK-F6 (Verkaufsprodukt der Firma Deuteron GmbH), 0,5 Teile Carbon Black Monarch 120 (Verkaufsprodukt der Firma Cabot Corp.), 0,2 Teile Lanco PEW 1555 (Verkaufsprodukt der Firma Lubrizol Advanced Materials Inc.), 10,7 Teile Aluminiumsilikat ASP 200 (Verkaufsprodukt der Firma BASF SE) und 30,95 Teile Titandioxid R 900-28 (Verkaufsprodukt der Firma E. I. du Pont de Nemours and Company) hinzugefügt. Darauf wird die Mischung für 10 Minuten bei ca. 800 Upm vordissolvert und anschließend mit Mahlperlen aus Zirkondioxid (Silibeads Typ ZY, Durchmesser 1,2 - 1,4 mm) und einem Perlen-Mahlgut-Verhältnis von 1/1 (w/w) bei 2500 Upm solange mit einer der Behältergröße angepassten Teflonscheibe gemahlen, bis eine Feinheit < 12 µm, gemessen mit einem Grindometer, erreicht wird.

### Herstellung kationischer Elektrotauchbäder B1, B2 und Vergleichsbeispiel zur Überprüfung der Korrosionsschutzeigenschaften mit Bismut-Komplex

2130,0 Teile einer 40%igen kationischen Elektrotauchlack-Dispersion (CathoGuard ® 520 Verkaufsprodukt der Firma BASF Coatings GmbH) werden mit 2400,5 Teilen vollentsalztem Wasser vermischt. Anschließend werden 370,0 Teile der Pigmentpaste P1 zusammen mit 99,5 Teilen einer wässrigen Bismut-L(+)-lactat-Lösung unter Rühren hinzugefügt. Das fertige Bad wird noch für mindestens 24 Stunden gerührt, bevor es überprüft werden kann.

Nach obigem Vorgehen werden weitere Prüfbäder mit folgenden Zusammensetzungen hergestellt:

**Tabelle 1: Zusammensetzung der verschiedenen Prüfbäder**

| | B1 | B2 | Vergleichsbeispiel |
|---|---|---|---|
| VE-Wasser | 2400,5 | 2408,0 | 2464,5 |
| BindemittelDispersion CathoGuard ® 520 | 2130,0 | 2130,0 | 2130,0 |

| Pigmentpaste: | | | |
|---|---|---|---|
| P1 | 370,0 | | |
| P2 | | 362,5 | |
| Vergleichspaste | | | 306,0 |
| Bismut-L(+)-lactat 8,0 % Bi | 99,5 | 99,5 | 99,5 |

Geölte Prüfbleche der Firma Chemetall der Größe 100x200mm mit der Bezeichnung Gardobond AA 6014 wurden zunächst für 3 Minuten in einem 60°C warmen Entfettungsbad gereinigt. Hierfür wurden in 1 Liter Leitungswasser unter Rühren 30,0 g Ridoline 1565 und 3,0 g Ridosol 1561 (beides Produkte der Firma Henkel AG & Co. KGaA) hinzugegeben. Der pH-Wert wurde auf 11,0 eingestellt. Nach der Entfettung wurden die Bleche für jeweils 1 Minute in Leitungswasser und anschließend in vollentsalztem Wasser gespült.

Unmittelbar danach wurde ein Blech in das jeweilige Prüfbad gehängt und als Kathode geschaltet. Eine Edelstahlanode der Größe 30x70 mm befand sich als Gegenpol im Bad. Im ersten Schritt wurde direkt eine Spannung von 5 Volt 1 Minute lang angelegt. Anschließend wurde die Spannung innerhalb von 30 Sekunden auf 200Volt angehoben. Diese Spannung wurde für 2 Minuten gehalten. Anschließend wurde das Prüfblech aus dem Bad genommen und der anhaftende nicht koagulierte Lack mit vollentsalztem Wasser abgespült.

Das Blech wurde für 30 Minuten bei 180°C Umluft in einem handelsüblichen Lacktrocknungsofen der Marke Heraeus vernetzt.

Mit den gewählten Spannungsprogrammen erhält man auf dem Prüfblech nach dem Vernetzen eine Trockenfilmschichtdicke von ca. 20µm. Diese wurde zerstörungsfrei mit einem Gerät der Firma Electrophysik mit den Handelsnamen Minitest 720 bestimmt.

### Korrosionsschutzergebnisse:

**Tabelle 2: CASS Ergebnisse der Ausführungsbeispiele und des Vergleichsbeispiels**

| CASS nach DIN EN ISO 9225 nach 240 Stunden | B1 | B2 | Vergleichsbeispiel |
|---|---|---|---|
| Enthaftung am Schnitt [mm] | 0,9 | 1,5 | 3,4 |
| Blasengrad [KW] | 2(S2-4) bis 1(S2-4) | 1(S2-4) bis 0(S0) | 5(S2-5) |

Die Enthaftung am Schnitt wurde nach DIN EN ISO 4628-8 bestimmt, der Blasengrad nach DIN EN ISO 4628-2.

## Patentansprüche

1. Pigment und/oder Füllstoff enthaltende Formulierung, umfassend einen Feststoff oder mehrere Feststoffe gewählt aus der Gruppe der Pigmente und Füllstoffe, und einen Emulgator (EQ), der die folgende Formel besitzt:
R¹-N^{⊕}(R²)(R³)(R⁴)X^{⊖} (EQ),
worin
R¹ ein mindestens eine aromatische Gruppe und mindestens eine aliphatische Gruppe enthaltender Rest mit 15 bis 40 Kohlenstoffatomen ist, der mindestens eine funktionelle Gruppe gewählt aus Hydroxylgruppen, Thiolgruppen und primären oder sekundären Aminogruppen enthält und/oder mindestens eine Kohlenstoff-Kohlenstoff-Mehrfachbindung aufweist, wobei der Rest R¹- die Struktur Grₐₗᵢ₁-Grₐᵣₒₘ-Grₐₗᵢ₂- besitzt, worin Grₐᵣₒₘ für eine aromatische Gruppe, Grₐₗᵢ₁ für eine erste aliphatische Gruppe und Grₐₗᵢ₂ für eine zweite aliphatische Gruppe steht und wobei Grₐₗᵢ₁ linear, unsubstituiert und heteroatomfrei ist und eine bis drei Doppelbindungen aufweist, Grₐᵣₒₘ eine Phenylen- oder Naphthylen-Gruppe ist, und Grₐₗᵢ₂ linear ist, eine Hydroxylgruppe in beta-Position zum Stickstoffatom der allgemeinen Formel des Emulgators (EQ) und zusätzlich als Heteroatom O, in Form einer Ethergruppe enthält, R², R³ und R⁴ unabhängig voneinander gleiche oder verschiedene, aliphatische Reste mit 1 bis 14 Kohlenstoffatomen sind, undX^{⊖} für das Säureanion einer organischen oder anorganischen Säure HX steht.

2. Pigment und/oder Füllstoff enthaltende Formulierung nach Anspruch 1, wobei mindestens zwei der Reste R¹, R², R³ und R⁴ eine funktionelle Gruppe gewählt aus Hydroxylgruppen, Thiolgruppen und primären oder sekundären Aminogruppen tragen.

3. Pigment und/oder Füllstoff enthaltende Formulierung nach einem der Ansprüche 1 bis 2, wobei die Reste R², R³ und/oder R⁴ neben Hydroxyl-, Thiol- primären und sekundären Aminogruppen mindestens eine weitere funktionelle Gruppe gewählt aus Ethergruppen, Estergruppen und Amidgruppen tragen.

4. Pigment und/oder Füllstoff enthaltende Formulierung nach einem der Ansprüche 1 bis 3, wobei es sich bei X^{⊖} um das Säureanion einer Säure HX handelt, die gewählt ist aus der Gruppe der nicht-hydroxyfunktionellen Carbonsäuren und monohydroxyfunktionellen Carbonsäuren.

5. Pigment und/oder Füllstoff enthaltende Formulierung nach einem der Ansprüche 1 bis 4, wobei eine Mischung aus verschiedenen Emulgatoren (EQ) eingesetzt wird, in welcher mehr als 50 mol-% der Reste R¹ Kohlenstoff-Kohlenstoff-Mehrfachbindungen enthalten.

6. Pigment und/oder Füllstoff enthaltende Formulierung nach einem der Ansprüche 1 bis 15, enthaltend ein Polymer gewählt aus der Gruppe der Polymerisations-, Polykondensations- und/oder Polyadditionsprodukte.

7. Pigment und/oder Füllstoff enthaltende Formulierung nach Anspruch 6, wobei es sich beim Polymer um ein Epoxy-Amin-Addukt oder ein Acrylharz handelt.

8. Pigment und/oder Füllstoff enthaltende Formulierung nach einem der Ansprüche 1 bis 7, wobei ein Vernetzungsmittel gewählt aus der Gruppe der blockierten Polyisocyanate, Aminoplastharze und Tris(alkoxycarbonylamino)triazine enthalten ist.

9. Wässrige Zubereitung, umfassend eine Pigment und/oder Füllstoff enthaltende Formulierung gemäß einem der Ansprüche 1 bis 8.

10. Wässrige Zubereitung nach Anspruch 9, enthaltend mindestens ein thermisch oder durch Einwirkung von Strahlung härtbares Harzsystem.

11. Wässrige Zubereitung gemäß Anspruch 10, wobei es sich um eine kathodisch abscheidbare Elektrotauchlackzusammensetzung handelt.

12. Verwendung einer wässrigen Zubereitung nach einem der Ansprüche 9 bis 11 zur kathodischen Elektrotauchbeschichtung von Metallsubstraten.

13. Verfahren zur kathodischen Elektrotauchbeschichtung von elektrisch leitfähigen Substraten, wobei als Elektrotauchlack eine wässrige Zusammensetzung gemäß einem der Ansprüche 9 bis 11 verwendet wird.

## Claims

1. A formulation containing pigment and/or filler, comprising a solid or a plurality of solids selected from the group of the pigments and fillers, and an emulsifier (EQ) which has the following formula:
R¹-N^{⊕}(R²)(R³)(R⁴)X^{⊖} (EQ),
where R1 is a group which contains at least one aromatic group and at least one aliphatic group, has 15 to 40 carbon atoms and contains at least one functional group selected from hydroxy groups, thiol groups and primary or secondary amino groups and/or has at least one carbon-carbon multiple bond, wherein the group R1- has the structure Grali1-Grarom-Grali2-, where Grarom represents an aromatic group, Grali1 represents a first aliphatic group and Grali2 represents a second aliphatic group, and wherein Grali1 is linear, unsubstituted and free of heteroatoms and has one to three double bonds, Grarom is a phenylene or naphthylene group, and Grali2 is linear, contains a hydroxy group in beta position to the nitrogen atom of the general formula of the emulsifier (EQ) and additionally contains O as a heteroatom in the form of an ether group, R2, R3 and R4 represent, independently of one another, identical or different aliphatic groups having 1 to 14 carbon atoms, and X⊖ represents the acid anion of an organic or inorganic HX acid.

2. The formulation containing pigment and/or filler according to claim 1, wherein at least two of the groups R1, R2, R3 and R4 bear a functional group selected from hydroxy groups, thiol groups and primary or secondary amino groups.

3. The formulation containing pigment and/or filler according to one of claims 1 to 2, wherein the groups R2, R3 and/or R4 bear, in addition to hydroxy groups, thiol groups and primary and secondary amino groups, at least one further functional group selected from ether groups, ester groups and amide groups.

4. The formulation containing pigment and/or filler according to one of claims 1 to 3, wherein X⊖ is the acid anion of an HX acid selected from the group of the non-hydroxy-functional carboxylic acids and monohydroxy-functional carboxylic acids.

5. The formulation containing pigment and/or filler according to one of claims 1 to 4, wherein a mixture of various emulsifiers (EQ) is used, in which more than 50 mol.% of the groups R1 contain carbon-carbon multiple bonds.

6. The formulation containing pigment and/or filler according to one of claims 1 to 15, containing a polymer selected from the group of the polymerization, polycondensation and/or polyaddition products.

7. The formulation containing pigment and/or filler according to claim 6, wherein the polymer is an epoxy-amine adduct or an acrylic resin.

8. The formulation containing pigment and/or filler according to one of claims 1 to 7, wherein a cross-linking agent selected from the group of the blocked polyisocyanates, aminoplast resins and tris(alkoxycarbonylamino)triazines is contained.

9. An aqueous preparation comprising a formulation containing pigment and/or filler according to one of claims 1 to 8.

10. The aqueous preparation according to claim 9, containing at least one resin system which can be cured by heat or exposure to radiation.

11. The aqueous preparation according to claim 10, wherein it is a cathodically depositable electrocoating composition.

12. The use of an aqueous preparation according to one of claims 9 to 11 for cathodically electrocoating metal substrates.

13. A method for cathodically electrocoating electrically conductive substrates, wherein an aqueous composition according to one of the claims 9 to 11 is used as an electrocoating.

## Revendications

1. Formulation contenant un pigment et/ou une substance de charge, comprenant un ou plusieurs solides choisis dans le groupe des pigments et des substances de charges, et un émulsifiant (EQ) représenté par la formule :
R¹-N^{⊕}(R²)(R³)(R⁴)X^{⊖} (EQ),
dans laquelle
R¹ représente un radical contenant au moins un groupe aromatique et au moins un groupe aliphatique ayant de 15 à 40 atomes de carbone, contenant au moins un groupe fonctionnel choisi parmi les groupes hydroxyle, les groupes thiol et les groupes amino primaires ou secondaires et/ou présentant au moins une liaison multiple carbone-carbone, le radical R¹-possédant la structure Grₐₗᵢ₁-Grₐᵣₒₘ-Grₐₗᵢ₂-, dans laquelle Grₐᵣₒₘ représente un groupe aromatique, Grₐₗᵢ₁ représente un premier groupe aliphatique et Grₐₗᵢ₂ représente un second groupe aliphatique, et dans laquelle Grₐₗᵢ₁ est linéaire, non substitué et sans hétéroatome et présente une à trois doubles liaisons, Grₐᵣₒₘ est un groupe phénylène ou groupe naphtylène, et Grₐₗᵢ₂ est linéaire, contient un groupe hydroxyle en position bêta par rapport à l'atome d'azote de la formule générale de l'émulsifiant (EQ) et, en outre, en tant qu'hétéroatome O, sous la forme d'un groupe éther, R², R³ et R⁴ sont indépendamment l'un de l'autre des radicaux aliphatiques identiques ou différents ayant 1 à 14 atomes de carbone, et X^{⊖} représente l'anion acide d'un acide HX organique ou inorganique.

2. Formulation contenant un pigment et/ou une substance de charge selon la revendication 1, dans laquelle au moins deux des radicaux R¹, R², R³ et R⁴ portent un groupe fonctionnel choisi parmi les groupes hydroxyle, les groupes thiol et les groupes amino primaires ou secondaires.

3. Formulation contenant un pigment et/ou une charge selon l'une quelconque des revendications 1 à 2, dans laquelle les radicaux R², R³ et/ou R⁴, portent, outre les groupes hydroxyle, thiol et amino primaires et secondaires, au moins un autre groupe fonctionnel choisi parmi les groupes éther, les groupes ester et les groupes amide.

4. Formulation contenant un pigment et/ou une charge selon l'une quelconque des revendications 1 à 3, dans laquelle X^{⊖} est l'anion acide d'un acide HX choisi dans le groupe des acides carboxyliques non hydroxy-fonctionnels et des acides carboxyliques monohydroxy-fonction nels.

5. Formulation contenant un pigment et/ou une substance de charge selon l'une quelconque des revendications 1 à 4, dans laquelle on utilise un mélange d'émulsifiants (EQ) différents, dans laquelle plus de 50 % en moles des radicaux R¹ contiennent des liaisons multiples carbone-carbone.

6. Formulation contenant un pigment et/ou une substance de charge selon l'une quelconque des revendications 1 à 15, contenant un polymère choisi dans le groupe des produits de polymérisation, de polycondensation et/ou de polyaddition.

7. Formulation contenant un pigment et/ou une substance de charge selon la revendication 6, dans laquelle le polymère est un produit d'addition époxy-amine ou une résine acrylique.

8. Formulation contenant un pigment et/ou une substance de charge selon l'une quelconque des revendications 1 à 7, laquelle contient un agent de réticulation choisi dans le groupe des polyisocyanates bloqués, des résines aminoplastes et des tris(alcoxycarbonylamino)triazines.

9. Préparation aqueuse comprenant une formulation contenant un pigment et/ou une substance de charge selon l'une quelconque des revendications 1 à 8.

10. Préparation aqueuse selon la revendication 9, comprenant au moins un système de résine durcissable thermiquement ou par rayonnement.

11. Préparation aqueuse selon la revendication 10, qui est une composition de d'enduction électrophorétique au trempé à précipitation cathodique.

12. Utilisation d'une préparation aqueuse selon l'une quelconque des revendications 9 à 11 pour l'enduction électrophorétique au trempé cathodique de substrats métalliques.

13. Procédé d'enduction électrophorétique au trempé cathodique de substrats électriquement conducteurs, dans lequel une composition aqueuse selon l'une des revendications 9 à 11 est utilisée comme enduction électrophorétique au trempé.
